(19) Europäisches Patentamt / European Patent Office / Office européen des brevets

(11) **EP 4 615 089 A1**

(12) **EUROPEAN PATENT APPLICATION**
published in accordance with Art. 153(4) EPC

(43) Date of publication:
**10.09.2025 Bulletin 2025/37**

(21) Application number: **23884762.8**

(22) Date of filing: **27.10.2023**

(51) International Patent Classification (IPC):
**H04W 72/04** (2023.01)   **H04B 7/0456** (2017.01)

(52) Cooperative Patent Classification (CPC):
**H04B 7/0413; H04B 7/0456; H04B 7/06;
H04W 72/04**

(86) International application number:
**PCT/CN2023/127171**

(87) International publication number:
**WO 2024/093830 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022  CN 202211378581**

(71) Applicant: **Huawei Technologies Co., Ltd.
Shenzhen, Guangdong 518129 (CN)**

(72) Inventors:
• **LI, Ting**
  **Shenzhen, Guangdong 518129 (CN)**
• **WANG, Xiaohan**
  **Shenzhen, Guangdong 518129 (CN)**
• **CHEN, Xinyue**
  **Shenzhen, Guangdong 518129 (CN)**
• **JIN, Huangping**
  **Shenzhen, Guangdong 518129 (CN)**

(74) Representative: **Roth, Sebastian
Mitscherlich PartmbB
Patent- und Rechtsanwälte
Karlstraße 7
80333 München (DE)**

(54) **CHANNEL STATE PARAMETER REPORTING METHOD, APPARATUS AND SYSTEM**

(57) This application provides a channel state parameter reporting method, an apparatus, and a system. The method includes: A terminal device obtains a quantity of space domain basis vectors respectively corresponding to N channel state information reference signal CSI-RS resources, where the N CSI-RS resources are determined in Q CSI-RS resources, N is a positive integer less than or equal to Q, and Q is a positive integer greater than or equal to 1; and sends indication information, where the indication information indicates the quantity of space domain basis vectors respectively corresponding to the N CSI-RS resources. In the method, after determining a quantity of space domain basis vectors respectively corresponding to a plurality of TRPs, the terminal device reports the quantities to a network device, so that the network device can obtain the quantity of space domain basis vectors respectively corresponding to the plurality of TRPs, and can determine respective precoding matrices of the plurality of TRPs, to improve communication quality.

FIG. 5

EP 4 615 089 A1

**Description**

This application claims priority to Chinese Patent Application No. 202211378581.3, filed with the China National Intellectual Property Administration on November 4, 2022 and entitled "CHANNEL STATE PARAMETER REPORTING METHOD, APPARATUS, AND SYSTEM", which is incorporated herein by reference in its entirety.

**TECHNICAL FIELD**

This application relates to the communication field, and in particular, to a channel state parameter reporting method, an apparatus, and a system.

**BACKGROUND**

In a frequency division duplex massive multiple-input multiple-output (Frequency Division Duplex Massive Multiple-Input Multiple-Output, FDD massive MIMO) system, because there is a large frequency spacing between an uplink channel and a downlink channel in an FDD system, and the uplink channel and the downlink channel are not completely reciprocal, a complete downlink channel state cannot be obtained through estimation on an uplink channel state in the FDD system. Therefore, obtaining of downlink channel state information (Channel State Information, CSI) becomes a key to determining the downlink channel state in the FDD system. In a conventional technology, reporting of channel state information such as a precoding matrix indicator (Precoding Matrix Indicator, PMI) is usually for a terminal device and a single transmission reception point (Transmission Reception Point, TRP). With development of communication technologies, a communication system, for example, a 5th generation (5th Generation, 5G) communication system, has a higher requirement on a system capacity, spectral efficiency, and the like, and a communication scenario of multi-TRP coordinated transmission is becoming increasingly widespread. In multi-TRP coordinated transmission, a plurality of TRPs coordinate with each other to jointly provide a service for a terminal device. In this case, the terminal device needs to report channel state information between the terminal device and each of the coordinated TRPs. How to effectively report channel state parameters of the plurality of TRPs becomes an urgent problem to be resolved.

**SUMMARY**

This application provides a channel state parameter reporting method, an apparatus, and a system, to accurately obtain channel state information of a plurality of TRPs, thereby improving communication quality.

According to a first aspect, a channel state parameter reporting method is provided. The method may include: obtaining a quantity of space domain basis vectors respectively corresponding to N channel state information reference signal resources (Channel State Information Reference Signal resources, CSI-RS resources), where the N CSI-RS resources are determined in Q CSI-RS resources, N is a positive integer less than or equal to Q, and Q is a positive integer greater than or equal to 1; and sending indication information, where the indication information indicates the quantity of space domain basis vectors respectively corresponding to the N CSI-RS resources.

Optionally, the quantity of space domain basis vectors respectively corresponding to the N CSI-RS resources are determined based on a sum of a quantity of space domain basis vectors supported by the Q CSI-RS resources, and a sum of the quantity of space domain basis vectors respectively corresponding to the N CSI-RS resources is less than or equal to the sum of the quantity of space domain basis vectors supported by the Q CSI-RS resources.

It should be understood that a quantity of space domain basis vectors in this application are used as an example of channel state information, and can be used by a network device to determine channel state information of a plurality of TRPs. However, this application is not limited thereto. Another parameter that can reflect the channel state information, for example, a quantity of ports, is also applicable to the solution of this application.

It should be further understood that the N CSI-RS resources are in one-to-one correspondence with N TRPs, and a case in which the CSI-RS resource is replaced with a TRP is also applicable to this application.

In the method, after determining a quantity of space domain basis vectors respectively corresponding to a plurality of TRPs, a terminal device reports the quantities to the network device, so that the network device can obtain the quantity of space domain basis vectors respectively corresponding to the plurality of TRPs, and can determine respective precoding matrices of the plurality of TRPs.

With reference to the first aspect, in some implementations of the first aspect, the method may further include: obtaining a first parameter, where the first parameter indicates a maximum value of the sum of the quantity of space domain basis vectors respectively corresponding to the N CSI-RS resources, and the first parameter is less than or equal to the sum of the quantity of space domain basis vectors supported by the Q CSI-RS resources; and determining, based on the first parameter, the quantity of space domain basis vectors respectively corresponding to the N CSI-RS resources.

The first parameter may be understood as an upper limit of the sum of the quantity of space domain basis vectors respectively corresponding to the N CSI-RS resources. In other words, a space domain basis vector quantity corresponding to a TRP is within a capability range of a space domain basis vector quantity supported by the TPR.

With reference to the first aspect, in some implementations of the first aspect, the obtaining a quantity of space domain basis vectors respectively corresponding to N CSI-RS resources includes: obtaining, based on the first parameter and a space domain basis vector quantity value candidate set, the quantity of space domain basis vectors respectively corresponding to the N CSI-RS resources, where the space domain basis vector quantity value candidate set includes at least one value, and any one of the quantity of space domain basis vectors respectively corresponding to the N CSI-RS resources belongs to the space domain basis vector quantity value candidate set.

Further, a value of the space domain basis vector quantity may be determined in the space domain basis vector quantity value candidate set. The space domain basis vector quantity value candidate set may be predefined in a protocol, may be preconfigured, or may be indicated. For example, the network device indicates the space domain basis vector quantity value candidate set to the terminal device. This is not limited in this application.

With reference to the first aspect, in some implementations of the first aspect, that the indication information indicates the quantity of space domain basis vectors respectively corresponding to the N CSI-RS resources includes: The indication information includes first indication information and second indication information, the first indication information indicates the sum of the quantity of space domain basis vectors respectively corresponding to the N CSI-RS resources, and the second indication information indicates the quantity of space domain basis vectors respectively corresponding to the N CSI-RS resources.

With reference to the first aspect, in some implementations of the first aspect, the second indication information indicates space domain basis vectors corresponding to the N CSI-RS resources.

In this manner, the second indication information indicates the space domain basis vectors, and the network device may determine, based on the space domain basis vectors, the quantity of space domain basis vectors respectively corresponding to the N CSI-RS resources. In other words, this manner may be understood as implicitly indicating the quantity of space domain basis vectors.

With reference to the first aspect, in some implementations of the first aspect, the second indication information includes S bits, S is determined based on N, P, and $L_{tot}$, P is a quantity of CSI-RS ports of a TRP corresponding to any one of the N CSI-RS resources, and $L_{tot}$ is the sum of the quantity of space domain basis vectors respectively corresponding to the N CSI-RS resources.

In this manner, there may be a plurality of options for the space domain basis vectors corresponding to the N CSI-RS resources, and the second indication information indicates one of the plurality of options by using a plurality of bits, to indicate, to the network device, the space domain basis vectors corresponding to the N CSI-RS resources, so that the network device can further determine the quantity of space domain basis vectors respectively corresponding to the N CSI-RS resources. Therefore, indication overheads are reduced.

With reference to the first aspect, in some implementations of the first aspect, the first indication information is carried in a CSI part 1, and the second indication information is carried in a CSI part 2.

With reference to the first aspect, in some implementations of the first aspect, the indication information includes $Q*\lceil log2(Y) \rceil$ bits, first $N*\lceil log2(Y) \rceil$ bits or last $N*\lceil log2(Y) \rceil$ bits of the indication information indicate the quantity of space domain basis vectors respectively corresponding to the N CSI-RS resources, every $\lceil log2(Y) \rceil$ bits in the first $N*\lceil log2(Y) \rceil$ bits or last $N*\lceil log2(Y) \rceil$ bits of the indication information correspond to an index of one space domain basis vector quantity in the space domain basis vector quantity value candidate set, and Y is a quantity of elements included in the space domain basis vector quantity value candidate set.

In this manner, the bits are specified in the indication information to indicate the quantity of space domain basis vectors respectively corresponding to the N CSI-RS resources, and the network device does not need to parse a remaining bit that is not used for indication. Therefore, parsing complexity is reduced.

With reference to the first aspect, in some implementations of the first aspect, the indication information includes $Q*\lceil log2(Y) \rceil$ bits, the $Q*\lceil log2(Y) \rceil$ bits are divided into Q groups, any one of the Q groups includes $\lceil log2(Y) \rceil$ bits, the Q groups respectively correspond to the Q CSI-RS resources, N groups of bits corresponding to the N CSI-RS resources respectively indicate indexes of the quantity of space domain basis vectors respectively corresponding to the N CSI-RS resources in the space domain basis vector quantity value candidate set, and Y is a quantity of elements included in the space domain basis vector quantity value candidate set.

In this manner, the bits of the indication information correspond to the Q CSI-RS resources, and values may be assigned to the bits corresponding to the N CSI-RS resources, to indicate the quantity of space domain basis vectors respectively corresponding to the N CSI-RS resources. The network device does not need to parse a remaining bit that does not correspond to the N CSI-RS resources. Therefore, flexibility of designing the indication information is further improved.

With reference to the first aspect, in some implementations of the first aspect, the obtaining a quantity of space domain basis vectors respectively corresponding to N CSI-RS resources includes: obtaining, based on the first parameter and a first correspondence, the quantity of space domain basis vectors respectively corresponding to the N CSI-RS resources, where the first correspondence is a correspondence between a first index and the quantity of space domain basis vectors respectively corresponding to the N CSI-RS resources.

With reference to the first aspect, in some implementations of the first aspect, the first correspondence belongs to a second correspondence, the second correspondence includes at least two correspondences, the at least two correspondences include at least two indexes, the at least two indexes include the second index and a third index, a value of the second index is less than a value of the third index, and a sum of a quantity of space domain basis vectors that respectively correspond to the N CSI-RS resources and that correspond to the second index is less than a sum of a quantity of space domain basis vectors that respectively correspond to the N CSI-RS resources and that correspond to the third index.

With reference to the first aspect, in some implementations of the first aspect, that the indication information indicates the quantity of space domain basis vectors respectively corresponding to the N CSI-RS resources includes: The indication information indicates the first index.

The first correspondence and/or the second correspondence may be predefined in the protocol, may be preconfigured, or may be indicated. For example, the network device indicates the first correspondence and/or the second correspondence to the terminal device. This is not limited in this application.

In this manner, the indication information indicates only the index, and the network device may determine, based on the index and the correspondence, the quantity of space domain basis vectors respectively corresponding to the N CSI-RS resources. Therefore, indication overheads are further reduced.

With reference to the first aspect, in some implementations of the first aspect, the method further includes: receiving configuration information, where the configuration information indicates at least one of the following: the first parameter; an average value of a quantity of space domain basis vectors supported by the N CSI-RS resources; and an average value of the quantity of space domain basis vectors supported by the Q CSI-RS resources. The obtaining a first parameter includes: determining the first parameter based on the configuration information.

In other words, the configuration information may directly indicate a value of the first parameter, or may indicate another parameter to determine the value of the first parameter.

With reference to the first aspect, in some implementations of the first aspect, the indication information further indicates the N CSI-RS resources.

In this manner, the indication information indicates the N CSI-RS resources, so that in the foregoing implementations, the network device may accurately determine, based on both the indication information of the N CSI-RS resources and the indication information of the quantity of space domain basis vectors, a space domain basis vector quantity corresponding to each CSI-RS resource. Therefore, accuracy of determining a channel state of each TRP by the network device is improved.

According to a second aspect, a channel state parameter reporting method is provided. The method may include: receiving indication information, where the indication information indicates a quantity of space domain basis vectors respectively corresponding to N channel state information reference signal resources CSI-RS resources, the N CSI-RS resources are determined in Q CSI-RS resources, N is a positive integer less than or equal to Q, and Q is a positive integer greater than or equal to 1; and determining precoding matrices based on the quantity of space domain basis vectors respectively corresponding to the N CSI-RS resources.

Optionally, the quantity of space domain basis vectors respectively corresponding to the N CSI-RS resources are determined based on a sum of a quantity of space domain basis vectors supported by the Q CSI-RS resources, and a sum of the quantity of space domain basis vectors respectively corresponding to the N CSI-RS resources is less than or equal to the sum of the quantity of space domain basis vectors supported by the Q CSI-RS resources.

With reference to the second aspect, in some implementations of the second aspect, the quantity of space domain basis vectors respectively corresponding to the N CSI-RS resources are determined based on a first parameter, the first parameter indicates a maximum value of the sum of the quantity of space domain basis vectors respectively corresponding to the N CSI-RS resources, and the first parameter is less than or equal to the sum of the quantity of space domain basis vectors supported by the Q CSI-RS resources.

With reference to the second aspect, in some implementations of the second aspect, that the quantity of space domain basis vectors respectively corresponding to the N CSI-RS resources are determined based on a first parameter includes: The a quantity of space domain basis vectors respectively corresponding to the N CSI-RS resources are determined based on the first parameter and a space domain basis vector quantity value candidate set, the first space domain basis vector quantity value candidate set includes at least one value, and any one of the quantity of space domain basis vectors respectively corresponding to the N CSI-RS resources belongs to the space domain basis vector quantity value candidate set.

With reference to the second aspect, in some implementations of the second aspect, that the indication information indicates a quantity of space domain basis vectors respectively corresponding to N CSI-RS resources includes: The indication information includes first indication information and second indication information, the first indication information indicates the sum of the quantity of space domain basis vectors respectively corresponding to the N CSI-RS resources, and the second indication information indicates the quantity of space domain basis vectors respectively corresponding to the N CSI-RS resources.

With reference to the second aspect, in some implementations of the second aspect, the second indication information indicates space domain basis vectors corresponding to the N CSI-RS resources.

With reference to the second aspect, in some implementations of the second aspect, the second indication information includes S bits, S is determined based on N, P, and $L_{tot}$, P is a quantity of CSI-RS ports of a TRP corresponding to any one of the N CSI-RS resources, and $L_{tot}$ is the sum of the quantity of space domain basis vectors respectively corresponding to the N CSI-RS resources.

With reference to the second aspect, in some implementations of the second aspect, the first indication information is carried in a CSI part 1, and the second indication information is carried in a CSI part 2.

With reference to the second aspect, in some implementations of the second aspect, the indication information includes $Q*\lceil log2(Y) \rceil$ bits, first $N*\lceil log2(Y) \rceil$ bits or last $N*\lceil log2(Y) \rceil$ bits of the indication information indicate the quantity of space domain basis vectors respectively corresponding to the N CSI-RS resources, every $\lceil log2(Y) \rceil$ bits in the first $N*\lceil log2(Y) \rceil$ bits or last $N*\lceil log2(Y) \rceil$ bits of the indication information correspond to an index of one space domain basis vector quantity in the space domain basis vector quantity value candidate set, and Y is a quantity of elements included in the space domain basis vector quantity value candidate set.

With reference to the second aspect, in some implementations of the second aspect, the indication information includes $Q*\lceil log2(Y) \rceil$ bits, the $Q*\lceil log2(Y) \rceil$ bits are divided into Q groups, any one of the Q groups includes $\lceil log2(Y) \rceil$ bits, the Q groups respectively correspond to the Q CSI-RS resources, and N groups of bits corresponding to the N CSI-RS resources respectively indicate indexes of the quantity of space domain basis vectors respectively corresponding to the N CSI-RS resources in the space domain basis vector quantity value candidate set.

With reference to the second aspect, in some implementations of the second aspect, that the quantity of space domain basis vectors respectively corresponding to the N CSI-RS resources are determined based on a first parameter includes: The a quantity of space domain basis vectors respectively corresponding to the N CSI-RS resources are determined based on the first parameter and a first correspondence, where the first correspondence is a correspondence between a first index and the quantity of space domain basis vectors respectively corresponding to the N CSI-RS resources.

With reference to the second aspect, in some implementations of the second aspect, the first correspondence belongs to a second correspondence, the second correspondence includes at least two correspondences, the at least two correspondences include at least two indexes, the at least two indexes include the second index and a third index, a value of the second index is less than a value of the third index, and a sum of a quantity of space domain basis vectors that respectively correspond to the N CSI-RS resources and that correspond to the second index is less than a sum of a quantity of space domain basis vectors that respectively correspond to the N CSI-RS resources and that correspond to the third index.

With reference to the second aspect, in some implementations of the second aspect, that the indication information indicates a quantity of space domain basis vectors respectively corresponding to N CSI-RS resources includes:

The indication information indicates the first index.

With reference to the second aspect, in some implementations of the second aspect, the method further includes: sending configuration information, where the configuration information is used to determine the first parameter, and the configuration information indicates at least one of the following: the first parameter; an average value of a quantity of space domain basis vectors supported by the N CSI-RS resources; and an average value of the quantity of space domain basis vectors supported by the Q CSI-RS resources.

With reference to the second aspect, in some implementations of the second aspect, the indication information further indicates the N CSI-RS resources.

It should be understood that, the second aspect is an implementation on a peer side of the first aspect, and descriptions of supplements, explanations, and beneficial effect of the first aspect are also applicable to the second aspect. Details are not described herein again.

According to a third aspect, a communication apparatus is provided. The communication apparatus includes a processing module and a transceiver module. The processing module is configured to obtain a quantity of space domain basis vectors respectively corresponding to N channel state information reference signal resources CSI-RS resources, where the N CSI-RS resources are determined in Q CSI-RS resources, N is a positive integer less than or equal to Q, and Q is a positive integer greater than or equal to 1. The transceiver module is configured to send indication information, where the indication information indicates the quantity of space domain basis vectors respectively corresponding to the N CSI-RS resources.

Optionally, the quantity of space domain basis vectors respectively corresponding to the N CSI-RS resources are determined based on a sum of a quantity of space domain basis vectors supported by the Q CSI-RS resources, and a sum of the quantity of space domain basis vectors respectively corresponding to the N CSI-RS resources is less than or equal to the sum of the quantity of space domain basis vectors supported by the Q CSI-RS resources.

With reference to the third aspect, in some implementations of the third aspect, the processing module is further configured to obtain a first parameter, where the first parameter indicates a maximum value of the sum of the quantity of space domain basis vectors respectively corresponding to the N CSI-RS resources, and the first parameter is less than or equal to the sum of the quantity of space domain basis vectors supported by the Q CSI-RS resources; and the processing module is further configured to determine, based on the first parameter, the quantity of space domain basis vectors respectively corresponding to the N CSI-RS resources.

With reference to the third aspect, in some implementations of the third aspect, that the processing module is configured to obtain a quantity of space domain basis vectors respectively corresponding to N CSI-RS resources includes: The processing module is configured to obtain, based on the first parameter and a space domain basis vector quantity value candidate set, the quantity of space domain basis vectors respectively corresponding to the N CSI-RS resources, where the space domain basis vector quantity value candidate set includes at least one value, and any one of the quantity of space domain basis vectors respectively corresponding to the N CSI-RS resources belongs to the space domain basis vector quantity value candidate set.

With reference to the third aspect, in some implementations of the third aspect, that the indication information indicates the quantity of space domain basis vectors respectively corresponding to the N CSI-RS resources includes: The indication information includes first indication information and second indication information, the first indication information indicates the sum of the quantity of space domain basis vectors respectively corresponding to the N CSI-RS resources, and the second indication information indicates the quantity of space domain basis vectors respectively corresponding to the N CSI-RS resources.

With reference to the third aspect, in some implementations of the third aspect, the second indication information indicates space domain basis vectors corresponding to the N CSI-RS resources.

With reference to the third aspect, in some implementations of the third aspect, the second indication information includes S bits, S is determined based on N, P, and $L_{tot}$, P is a quantity of CSI-RS ports of a TRP corresponding to any one of the N CSI-RS resources, and $L_{tot}$ is the sum of the quantity of space domain basis vectors respectively corresponding to the N CSI-RS resources.

With reference to the third aspect, in some implementations of the third aspect, the first indication information is carried in a CSI part 1, and the second indication information is carried in a CSI part 2.

With reference to the third aspect, in some implementations of the third aspect, the indication information includes $Q*\lceil log2(Y) \rceil$ bits, first $N*\lceil log2(Y) \rceil$ bits or last $N*\lceil log2(Y) \rceil$ bits of the indication information indicate the quantity of space domain basis vectors respectively corresponding to the N CSI-RS resources, every $\lceil log2(Y) \rceil$ bits in the first $N*\lceil log2(Y) \rceil$ bits or last $N*\lceil log2(Y) \rceil$ bits of the indication information correspond to an index of one space domain basis vector quantity in the space domain basis vector quantity value candidate set, and Y is a quantity of elements included in the space domain basis vector quantity value candidate set.

With reference to the third aspect, in some implementations of the third aspect, the indication information includes $Q*\lceil log2(Y) \rceil$ bits, the $Q*\lceil log2(Y) \rceil$ bits are divided into Q groups, any one of the Q groups includes $\lceil log2(Y) \rceil$ bits, the Q groups respectively correspond to the Q CSI-RS resources, N groups of bits corresponding to the N CSI-RS resources respectively indicate indexes of the quantity of space domain basis vectors respectively corresponding to the N CSI-RS resources in the space domain basis vector quantity value candidate set, and Y is a quantity of elements included in the space domain basis vector quantity value candidate set.

With reference to the third aspect, in some implementations of the third aspect, that the processing module is configured to obtain a quantity of space domain basis vectors respectively corresponding to N CSI-RS resources includes: The processing module is configured to obtain, based on the first parameter and a first correspondence, the quantity of space domain basis vectors respectively corresponding to the N CSI-RS resources, where the first correspondence is a correspondence between a first index and the quantity of space domain basis vectors respectively corresponding to the N CSI-RS resources.

With reference to the third aspect, in some implementations of the third aspect, the first correspondence belongs to a second correspondence, the second correspondence includes at least two correspondences, the at least two correspondences include at least two indexes, the at least two indexes include the second index and a third index, a value of the second index is less than a value of the third index, and a sum of a quantity of space domain basis vectors that respectively correspond to the N CSI-RS resources and that correspond to the second index is less than a sum of a quantity of space domain basis vectors that respectively correspond to the N CSI-RS resources and that correspond to the third index.

With reference to the third aspect, in some implementations of the third aspect, that the indication information indicates the quantity of space domain basis vectors respectively corresponding to the N CSI-RS resources includes: The indication information indicates the first index.

With reference to the third aspect, in some implementations of the third aspect, the transceiver module is further configured to receive configuration information, where the configuration information indicates at least one of the following:

the first parameter;

an average value of a quantity of space domain basis vectors supported by the N CSI-RS resources; and

an average value of the quantity of space domain basis vectors supported by the Q CSI-RS resources.

The obtaining the first parameter includes: The processing module is further configured to determine the first parameter based on the configuration information.

With reference to the third aspect, in some implementations of the third aspect, the indication information further indicates the N CSI-RS resources.

It should be understood that, the third aspect is an implementation on an apparatus side corresponding to the first aspect, and descriptions of supplements, explanations, and beneficial effect of the first aspect are also applicable to the third aspect. Details are not described herein again.

According to a fourth aspect, a communication apparatus is provided. The communication apparatus includes a processing module and a transceiver module. The transceiver module is configured to receive indication information, where the indication information indicates a quantity of space domain basis vectors respectively corresponding to N channel state information reference signal resources CSI-RS resources, the N CSI-RS resources are determined in Q CSI-RS resources, N is a positive integer less than or equal to Q, and Q is a positive integer greater than or equal to 1. The processing module is configured to determine precoding matrices based on the quantity of space domain basis vectors respectively corresponding to the N CSI-RS resources.

Optionally, the quantity of space domain basis vectors respectively corresponding to the N CSI-RS resources are determined based on a sum of a quantity of space domain basis vectors supported by the Q CSI-RS resources, and a sum of the quantity of space domain basis vectors respectively corresponding to the N CSI-RS resources is less than or equal to the sum of the quantity of space domain basis vectors supported by the Q CSI-RS resources.

With reference to the fourth aspect, in some implementations of the fourth aspect, the quantity of space domain basis vectors respectively corresponding to the N CSI-RS resources are determined based on a first parameter, the first parameter indicates a maximum value of the sum of the quantity of space domain basis vectors respectively corresponding to the N CSI-RS resources, and the first parameter is less than or equal to the sum of the quantity of space domain basis vectors supported by the Q CSI-RS resources.

With reference to the fourth aspect, in some implementations of the fourth aspect, that the quantity of space domain basis vectors respectively corresponding to the N CSI-RS resources are determined based on a first parameter includes: The a quantity of space domain basis vectors respectively corresponding to the N CSI-RS resources are determined based on the first parameter and a space domain basis vector quantity value candidate set, the first space domain basis vector quantity value candidate set includes at least one value, and any one of the quantity of space domain basis vectors respectively corresponding to the N CSI-RS resources belongs to the space domain basis vector quantity value candidate set.

With reference to the fourth aspect, in some implementations of the fourth aspect, that the indication information indicates a quantity of space domain basis vectors respectively corresponding to N CSI-RS resources includes: The indication information includes first indication information and second indication information, the first indication information indicates the sum of the quantity of space domain basis vectors respectively corresponding to the N CSI-RS resources, and the second indication information indicates the quantity of space domain basis vectors respectively corresponding to the N CSI-RS resources.

With reference to the fourth aspect, in some implementations of the fourth aspect, the second indication information indicates space domain basis vectors corresponding to the N CSI-RS resources.

With reference to the fourth aspect, in some implementations of the fourth aspect, the second indication information includes S bits, S is determined based on N, P, and $L_{tot}$, P is a quantity of CSI-RS ports of a TRP corresponding to any one of the N CSI-RS resources, and $L_{tot}$ is the sum of the quantity of space domain basis vectors respectively corresponding to the N CSI-RS resources.

With reference to the fourth aspect, in some implementations of the fourth aspect, the first indication information is carried in a CSI part 1, and the second indication information is carried in a CSI part 2.

With reference to the fourth aspect, in some implementations of the fourth aspect, the indication information includes $Q*\lceil log2(Y) \rceil$ bits, first $N*\lceil log2(Y) \rceil$ bits or last $N*\lceil log2(Y) \rceil$ bits of the indication information indicate the quantity of space domain basis vectors respectively corresponding to the N CSI-RS resources, every $\lceil log2(Y) \rceil$ bits in the first $N*\lceil log2(Y) \rceil$ bits or last $N*\lceil log2(Y) \rceil$ bits of the indication information correspond to an index of one space domain basis vector quantity in the space domain basis vector quantity value candidate set, and Y is a quantity of elements included in the space domain basis vector quantity value candidate set.

With reference to the fourth aspect, in some implementations of the fourth aspect, the indication information includes $Q*\lceil log2(Y) \rceil$ bits, the $Q*\lceil log2(Y) \rceil$ bits are divided into Q groups, any one of the Q groups includes $\lceil log2(Y) \rceil$ bits, the Q groups respectively correspond to the Q CSI-RS resources, and N groups of bits corresponding to the N CSI-RS resources respectively indicate indexes of the quantity of space domain basis vectors respectively corresponding to the N CSI-RS resources in the space domain basis vector quantity value candidate set.

With reference to the fourth aspect, in some implementations of the fourth aspect, that the quantity of space domain basis vectors respectively corresponding to the N CSI-RS resources are determined based on a first parameter includes: The a quantity of space domain basis vectors respectively corresponding to the N CSI-RS resources are determined based on the first parameter and a first correspondence, where the first correspondence is a correspondence between a first index and the quantity of space domain basis vectors respectively corresponding to the N CSI-RS resources.

With reference to the fourth aspect, in some implementations of the fourth aspect, the first correspondence belongs to a second correspondence, the second correspondence includes at least two correspondences, the at least two correspondences include at least two indexes, the at least two indexes include the second index and a third index, a value of the second index is less than a value of the third index, and a sum of a quantity of space domain basis vectors that respectively correspond to the N CSI-RS resources and that correspond to the second index is less than a sum of a quantity of space domain basis vectors that respectively correspond to the N CSI-RS resources and that correspond to the third index.

With reference to the fourth aspect, in some implementations of the fourth aspect, that the indication information indicates a quantity of space domain basis vectors respectively corresponding to N CSI-RS resources includes: The indication information indicates the first index.

With reference to the fourth aspect, in some implementations of the fourth aspect, the transceiver module is further configured to send configuration information, where the configuration information is used to determine the first parameter, and the configuration information indicates at least one of the following:

the first parameter;
an average value of a quantity of space domain basis vectors supported by the N CSI-RS resources; and
an average value of the quantity of space domain basis vectors supported by the Q CSI-RS resources.

With reference to the fourth aspect, in some implementations of the fourth aspect, the indication information further indicates the N CSI-RS resources.

It should be understood that, the fourth aspect is an implementation on an apparatus side corresponding to the second aspect, and descriptions of supplements, explanations, and beneficial effect of the second aspect are also applicable to the fourth aspect. Details are not described herein again.

According to a fifth aspect, an embodiment of this application provides a communication apparatus. The communication apparatus includes an interface circuit and a processor. The interface circuit is configured to implement a function of the transceiver module in the third aspect, and the processor is configured to implement a function of the processing module in the third aspect.

According to a sixth aspect, an embodiment of this application provides a communication apparatus. The communication apparatus includes an interface circuit and a processor. The interface circuit is configured to implement a function of the transceiver module in the fourth aspect, and the processor is configured to implement a function of the processing module in the fourth aspect.

According to a seventh aspect, an embodiment of this application provides a computer-readable medium. The computer-readable medium stores program code executed by a terminal device, and the program code includes instructions used to perform the method in the first aspect or the second aspect, any possible manner of the first aspect or the second aspect, or all possible manners of the first aspect or the second aspect.

According to an eighth aspect, an embodiment of this application provides a computer-readable medium. The computer-readable medium stores program code executed by a network device, and the program code includes instructions used to perform the method in the first aspect or the second aspect, any possible manner of the first aspect or the second aspect, or all possible manners of the first aspect or the second aspect.

According to a ninth aspect, a computer program product storing computer-readable instructions is provided. When the computer-readable instructions are run on a computer, the computer is enabled to perform the method in the first aspect, any possible manner of the first aspect, or all possible manners of the first aspect.

According to a tenth aspect, a computer program product storing computer-readable instructions is provided. When the computer-readable instructions are run on a computer, the computer is enabled to perform the method in the second aspect, any possible manner of the second aspect, or all possible manners of the second aspect.

According to an eleventh aspect, a communication system is provided. The communication system includes an apparatus that has a function of implementing the method in the first aspect, any possible manner of the first aspect, or all possible manners of the first aspect and various possible designs and an apparatus that has a function of implementing the method in the second aspect, any possible manner of the second aspect, or all possible manners of the second aspect and various possible designs.

According to a twelfth aspect, a processor is provided. The processor is configured to be coupled to a memory, and configured to perform the method in the first aspect, any possible manner of the first aspect, or all possible manners of the first aspect.

According to a thirteenth aspect, a processor is provided. The processor is configured to be coupled to a memory, and configured to perform the method in the second aspect, any possible manner of the second aspect, or all possible manners of the second aspect.

According to a fourteenth aspect, a chip system is provided. The chip system includes a processor, and may further include a memory. The processor is configured to execute a computer program or instructions stored in the memory, to enable the chip system to implement the method in any one of the first aspect or the second aspect, or the possible implementations of the first aspect or the second aspect. The chip system may include a chip, or may include a chip and another discrete component.

According to a fifteenth aspect, a computer program product storing computer-readable instructions is provided. When the computer-readable instructions are run on a computer, the computer is enabled to perform the method in the first aspect, any possible manner of the first aspect, or all possible manners of the first aspect.

According to a sixteenth aspect, a computer program product storing computer-readable instructions is provided. When the computer-readable instructions are run on a computer, the computer is enabled to perform the method in the second aspect, any possible manner of the second aspect, or all possible manners of the second aspect.

According to a seventeenth aspect, a communication system is provided. The communication system includes at least one communication apparatus according to the third aspect and/or at least one communication apparatus according to the fourth aspect. The communication system is configured to implement the method in the first aspect or the second aspect, any possible manner of the first aspect or the second aspect, or all possible implementations of the first aspect or the second aspect.

## BRIEF DESCRIPTION OF DRAWINGS

FIG. 1 is a diagram of an architecture of a communication system to which an embodiment of this application is applicable;
FIG. 2 is a diagram of a protocol architecture of a communication apparatus;
FIG. 3 is a diagram of a channel measurement procedure;
FIG. 4 is a diagram of another channel measurement procedure;
FIG. 5 is a diagram of a channel state parameter reporting method according to an embodiment of this application;
FIG. 6 is a diagram of another channel state parameter reporting method according to an embodiment of this application;
FIG. 7 is a block diagram of a communication apparatus according to an embodiment of this application; and
FIG. 8 is a block diagram of another communication apparatus according to an embodiment of this application.

## DESCRIPTION OF EMBODIMENTS

The following describes technical solutions in embodiments of this application with reference to accompanying drawings.

The technical solutions in embodiments of this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to a device-to-device (device-to-device, D2D) communication system, a vehicle-to-everything (vehicle-to-everything, V2X) communication system, a machine-to-machine (machine-to-machine, M2M) communication system, a machine type communication (machine type communication, MTC) system, an internet of things (internet of things, IoT) communication system, or another communication system.

A terminal device in embodiments of this application may be a device that provides a user with voice/data, for example, a handheld device or vehicle-mounted device having a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device with a wireless communication function, a computing device or another processing device connected to a wireless modem, a wearable device, a terminal device in a 5G network, and a terminal device in a future evolved public land mobile network (public land mobile network, PLMN). This is not limited in embodiments of this application.

By way of example, and not limitation, in embodiments of this application, the terminal device may alternatively be a wearable device. The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands or smart jewelry for monitoring physical signs.

In addition, the terminal device in embodiments of this application may alternatively be a terminal device in an IoT system. IoT is an important component in development of future information technologies. A main technical feature of IoT is to connect a thing to a network by using a communication technology, to implement an intelligent network of human-machine interconnection and thing-thing interconnection.

In embodiments of this application, an apparatus configured to implement a function of the terminal device may be a terminal device; or may be an apparatus, for example, a chip system or a chip, that can support the terminal device in implementing the function, where the apparatus may be installed in the terminal device. In embodiments of this application, the chip system may include a chip, or may include a chip and another discrete component.

A network device in embodiments of this application may be a device configured to communicate with a terminal device, and the network device may be an evolved NodeB (evolved NodeB, eNB, or eNodeB) in an LTE system, or a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN, or one antenna panel or a group of antenna panels (including a plurality of antenna panels) of a base station in a 5G system. Alternatively, the network device may be a network node, for example, a baseband unit (baseband unit, BBU) or a distributed unit (distributed unit, DU), that constitutes a gNB or a transmission point. This is not limited in embodiments of this application.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be a terminal device or a network device, or a functional module that is in the terminal device or the network device and that can invoke the program and execute the program.

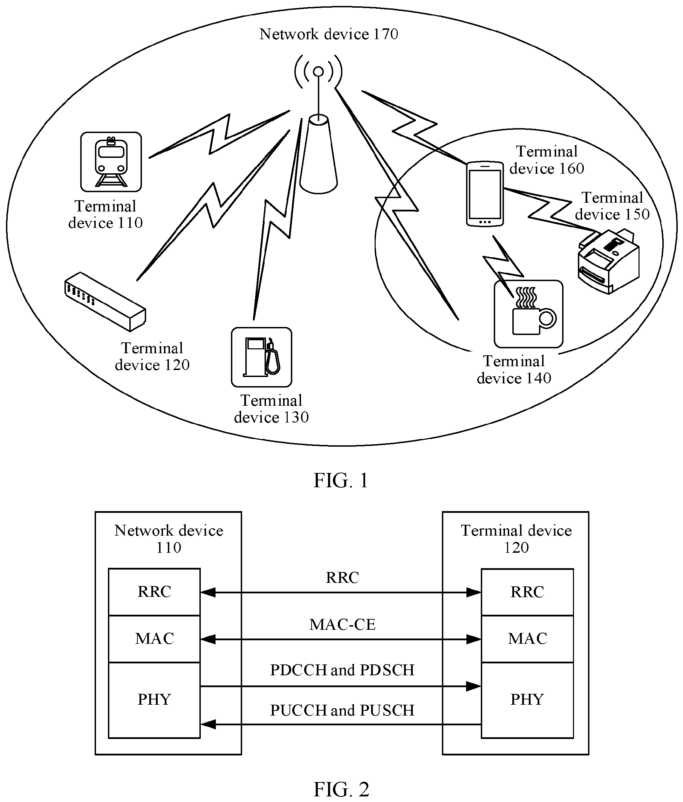

FIG. 1 is a diagram of a communication scenario to which an embodiment of this application is applicable. A communication system in FIG. 1 may include at least one terminal device (for example, a terminal device 110, a terminal device 120, a terminal device 130, a terminal device 140, a terminal device 150, and a terminal device 160) and a network device 170. The network device 170 is configured to: provide a communication service for the terminal device, and access a core network. The terminal device may access the network by searching for a synchronization signal, a broadcast signal, or the like sent by the network device 170, to establish communication with the network device. The terminal device 110, the terminal device 120, the terminal device 130, the terminal device 140, and the terminal device 160 in FIG. 1 may perform uplink and downlink transmission with the network device 170. For example, the network device 170 may send downlink data to the terminal device 110, the terminal device 120, the terminal device 130, the terminal device 140, and the terminal device 160, or may receive uplink data sent by the terminal device 110, the terminal device 120, the terminal device 130, the terminal device 140, and the terminal device 160.

In addition, the terminal device 140, the terminal device 150, and the terminal device 160 may also be considered as a communication system. The terminal device 160 may send downlink data to the terminal device 140 and the terminal device 150, or may receive uplink data sent by the terminal device 140 and the terminal device 150.

It should be understood that the communication system may include one or more network devices. One network device may send data to one or more terminal devices. Alternatively, a plurality of network devices may send data to one or more terminal devices.

FIG. 2 is a diagram of a modular structure of network elements in FIG. 1. As shown in FIG. 2, in this embodiment of this application, a network device 110 includes an RRC signaling exchange module, a MAC signaling exchange module, and a PHY signaling and data exchange module. A terminal device 120 also includes an RRC signaling exchange module, a MAC signaling exchange module, and a PHY signaling and data exchange module. The RRC signaling exchange module of the network device 110 is in communication connection to the RRC signaling exchange module of the terminal device 120, to implement sending and receiving of RRC signaling. The MAC signaling exchange module of the network device 110 is in communication connection to the MAC signaling exchange module of the terminal device 120, to implement sending and receiving of MAC control element (MAC control element, MAC-CE) signaling.

The PHY signaling and data exchange module of the network device 110 is in communication connection to the PHY signaling and data exchange module of the terminal device 120, so that the network device 110 can transmit a physical downlink control channel (physical downlink control channel, PDCCH) and a physical downlink shared channel (physical downlink shared channel, PDSCH) to the terminal device 120. In addition, the network device 110 can further receive a physical uplink control channel (physical uplink control channel, PUCCH) and a physical uplink shared channel (physical uplink shared channel, PUSCH) that are sent by the terminal device 120.

A 5G communication system has a higher requirement on a system capacity, spectral efficiency, and the like. In this scenario, a network device usually needs to obtain channel state information (channel state information, CSI) of an uplink channel and a downlink channel to ensure system performance. For an FDD massive MIMO system, accurate obtaining of downlink CSI is one of key factors for ensuring efficient system running. Different from a TDD system, in an FDD system, because there is a large frequency spacing between an uplink channel and a downlink channel, and the uplink channel and the downlink channel are not completely reciprocal, the complete downlink channel cannot be obtained through estimation on the uplink channel in the FDD system.

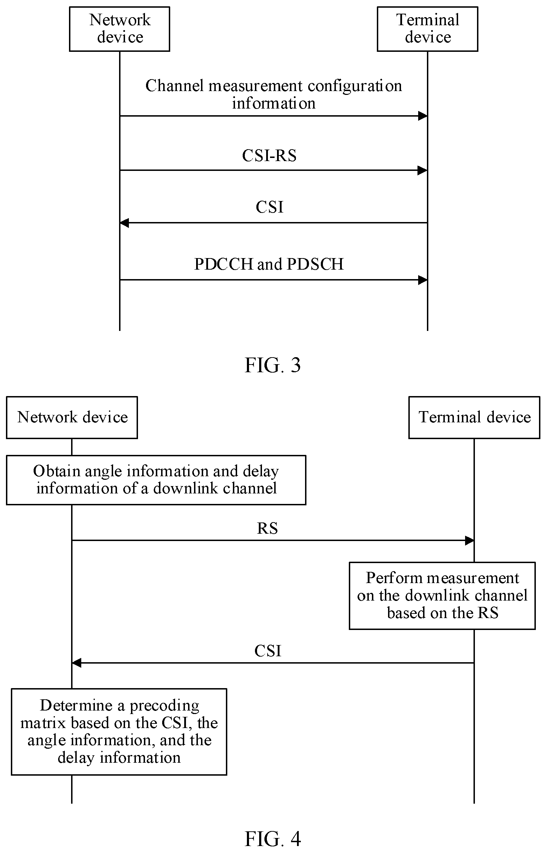

FIG. 3 is a diagram of a basic procedure of obtaining CSI of a downlink channel by a network device in a conventional FDD system. In the conventional FDD system, a terminal device needs to feed back the CSI of the downlink channel to the network device (for example, a base station or a gNB). A basic procedure is shown in FIG. 3. The network device needs to first send channel measurement configuration information to the terminal device, to configure channel measurement, for example, notify the terminal device of channel measurement time and behavior. Then, the network device sends a CSI-RS (which is also usually referred to as a pilot) to the terminal device for channel measurement. The terminal device performs channel measurement based on the received CSI-RS, calculates a final CSI feedback amount, and then feeds back the CSI of the downlink channel to the network device. The network device determines precoding information of downlink data based on the CSI fed back by the terminal device, to precode and send the downlink data. In other words, based on the CSI that is fed back, the network device may schedule the downlink data, for example, transmit a PDCCH and a PDSCH to the terminal device.

In a wireless communication system, CSI is information reported by a receive end (for example, a terminal device) to a transmit end (for example, a network device) and used to describe a channel attribute of a communication link. In the 5G communication system, the CSI includes but is not limited to a plurality of parameters such as a channel quality indicator (channel quality indicator, CQI), a precoding matrix indicator (precoding matrix indicator, PMI), a rank indicator (rank indicator, RI), a CSI-RS resource indicator (CSI-RS resource indicator, CRI), and a layer indicator (layer indicator, LI). It should be understood that the foregoing listed specific content of the CSI is merely an example for description, and shall not constitute any limitation on this application. The CSI may include one or more of the foregoing listed content, or may include other information that is different from the foregoing listed content and that is used to represent the CSI. This is not limited in this application.

In the FDD system, because there is the large frequency spacing between the uplink channel and the downlink channel, and the uplink channel and the downlink channel are not completely reciprocal, a network device cannot obtain the complete downlink channel through estimation on the uplink channel. In this case, a terminal device needs to report CSI of the downlink channel to the network device, so that the network device can determine a downlink channel matrix or a precoding matrix. A basic procedure in which the terminal device reports the CSI of the downlink channel to the network device may include the following several steps.

Step 1: The network device sends configuration information to the terminal device.

The configuration information is used for measurement configuration of the downlink channel, for example, configuration of measurement time of the downlink channel and measurement behavior of the downlink channel.

Step 2: The network device sends a reference signal (reference signal, RS), for example, a CSI-RS, to the terminal device.

The RS is used for measurement of the downlink channel.

Step 3: The terminal device performs measurement on the downlink channel based on the configuration information and the RS, to obtain the CSI of the downlink channel.

Step 4: The terminal device reports the CSI of the downlink channel to the network device.

Step 5: The network device determines the downlink channel matrix or the precoding matrix based on the CSI of the downlink channel.

In the FDD system, although the uplink channel and the downlink channel are not completely reciprocal, partial information between the uplink channel and the downlink channel has reciprocity, for example, angle reciprocity and delay reciprocity. Based on this, the terminal device may obtain the CSI of the downlink channel based on the reciprocity of the partial information between the uplink channel and the downlink channel, and report the CSI of the downlink channel to the network device, so that the network device can determine the downlink channel matrix or the precoding matrix. A basic procedure in which the terminal device reports the CSI of the downlink channel to the network device based on the reciprocity of the partial information between the uplink channel and the downlink channel may include the following several steps.

Step 1: The network device performs channel estimation on the uplink channel; and obtains, based on estimated information about the uplink channel, partial information of the downlink channel, such as angle information and delay information of the downlink channel.

Step 2: The network device sends an RS, for example, a CSI-RS, to the terminal device.

The RS includes the angle information and the delay information of the downlink channel.

Step 3: The terminal device performs measurement on the downlink channel based on the RS, to obtain the CSI of the downlink channel.

Step 4: The terminal device reports the CSI of the downlink channel to the network device.

Step 5: The network device determines the downlink channel matrix or the precoding matrix based on the CSI of the downlink channel and the angle information and the delay information of the downlink channel.

For example, the network device first calculates a CSI-RS precoding weight based on angle information and delay information of the uplink channel, and sends a precoded CSI-RS loaded with the angle information and the delay information; the terminal device measures the CSI-RS, obtains PMI information, and feeds back the PMI information to the network device; and then the network device determines the downlink channel matrix or the precoding matrix based on the PMI information fed back by the terminal device, the angle information, and the delay information.

A PMI feedback is determined and reported based on a codebook. Three-level codebook structures corresponding to TS 38.214 Release16 Enhanced Type II Codebook (Rel-16 eType-II codebook for short below) and TS 38.214 Release17 Further enhanced Type II port selection codebook (Rel-17 FeType-II codebook for short below) are both

$$W = W_1 \widetilde{W}_2 W_f^H .$$

For the Rel-16 eType-II codebook, $W_1 \in \mathbb{C}^{P \times 2L}$ is a space domain matrix that includes 2L space domain basis vectors used for space domain compression and that is shared (polarization shared) by all transmission layers, P is a quantity of CSI-RS ports, $W_f \in \mathbb{C}^{N_3 \times M_v}$ is a frequency domain matrix that includes $M_v$ frequency domain basis vectors used for frequency domain compression and that corresponds to each layer, $N_3$ is a quantity of subbands or a quantity of frequency domain units, and $\widetilde{W}_2 \in \mathbb{C}^{2L \times M_v}$ is $2LM_v$ linear combination coefficients corresponding to the space domain basis vectors and the frequency domain basis vectors. The terminal device needs to select several non-zero coefficients from the linear combination coefficients for reporting, and the non-zero coefficient that needs to be reported is indicated by using a bitmap (bitmap).

For the Rel-17 FeType-II codebook, a codebook may be selected through a port by using partial reciprocity between FDD uplink and downlink channels. $W_1 \in \mathbb{N}^{P \times K_1}$ is a port selection matrix, indicating that $K_1$ ports are selected from P ports, where $K_1 = 2L$, same L ports are selected from P/2 ports in each polarization direction, and P is a quantity of CSI-RS ports; $W_f \in \mathbb{C}^{N_3 \times M}$ is a frequency domain matrix including M frequency domain basis vectors used for frequency domain compression; $N_3$ is a quantity of subbands or a quantity of frequency domain units; and $\widetilde{W}_2 \in \mathbb{C}^{K_1 \times M}$ is $2LM$ linear combination coefficients corresponding to the ports and the frequency domain basis vectors. The terminal device needs to select several non-zero coefficients from the linear combination coefficients for reporting, and the non-zero coefficient that needs to be reported is indicated by using a bitmap. After completing channel measurement, the terminal device reports the CSI in uplink control information (Uplink Control Information, UCI). The CSI is divided into two parts (a part 1 and a part 2) for reporting. Overheads of the part 1 are fixed, and overheads of the part 2 may be determined based on a reporting amount in the part 1. For the Rel-16 eType-II codebook, a UCI part 1 (which may also be referred to as a CSI part 1) includes an RI, a CQI, and a total quantity of non-zero coefficients of all the transmission layers; and a UCI part 2 (which may also be referred to as a CSI part 2) includes space domain basis vector indication information, a space domain oversampling factor, frequency domain basis vector indication information, strongest coefficient indication information, a non-zero coefficient location indication bitmap, and a quantized non-zero coefficient. For the Rel-17 FeType-II codebook, only the space domain basis vector indication information and the space domain oversampling factor in the CSI part 2 need to be replaced with port selection indication information. The network device determines, based on a CSI reporting amount of the terminal device, the precoding matrix used for downlink data.

To further improve system performance, a plurality of TRPs may serve one terminal device in a multi-station coordination manner. There are a plurality of multi-station coordination manners, for example, coherent joint transmission (coherent joint transmission, CJT) and non-coherent joint transmission (non-coherent joint transmission, NCJT). In the CJT coordination manner, a plurality of TRPs simultaneously serve a terminal device, and transmission is transparent to the terminal device. From a perspective of the terminal device, the plurality of TRPs in a coordination set may be equivalent to one large base station. Therefore, the terminal device needs to jointly feed back CSI of all the TRPs in the coordination set, to enable coherent joint transmission.

TS 38.214 Release18 (referred to as Rel-18 below) focuses on CJT codebook enhancement based on Rel-16 eType-II/Rel-17 FeType-II. At the RAN1#110 meeting, it was discussed and approved to support two CJT codebook forms (N represents a coordinated TRP):

$$\begin{bmatrix} W_{1,1} \widetilde{W}_{2,1} W_{f,1}^H \\ \vdots \\ W_{1,N} \widetilde{W}_{2,N} W_{f,N}^H \end{bmatrix} \text{ or } \begin{bmatrix} W_{1,1} \widetilde{W}_{2,1} W_f^H \\ \vdots \\ W_{1,N} \widetilde{W}_{2,N} W_f^H \end{bmatrix}.$$

N is a quantity of TRPs participating in coordinated transmission. Similar to the codebook structure described above, $W_{1,n}$ is a space domain matrix or a port selection matrix of an nth TRP, $\widetilde{W}_{2,n}$ is a linear combination coefficient matrix of the nth TRP, $W_{f,n}$ is a frequency domain matrix of the nth TRP, $W_f$ is a frequency domain matrix shared by the N TRPs, and $()^H$ represents a conjugate transpose operation. For the foregoing two CJT codebook forms, a main difference lies in the frequency domain matrix, to be specific, whether each TRP has a respective frequency domain matrix or the N TRPs share a same frequency domain matrix. Considering that channel quality and space domain sparseness may be different between different coordinated TRPs, a quantity of space domain basis vectors of the TRPs or quantities $L_n$ of selected ports of the TRPs may be the same or may be different.

However, currently, for the Rel-16 eType-II codebook, a value of a space domain basis vector quantity L is configured by a network side by using signaling, and the value of L is bound to a value of another parameter. A plurality of candidate parameter combinations are predefined in a protocol, and the network side determines the value of L by configuring a parameter combination index. A list of parameter combinations defined in the Rel-16 eType-II codebook is shown in Table 1.

Table 1 Codebook parameter configuration table

| Index | L | $p_\upsilon$ | | $\beta$ |
|---|---|---|---|---|
| | | $\upsilon \in \{1, 2\}$ | $\upsilon \in \{3, 4\}$ | |
| 1 | 2 | ¼ | 1/8 | ¼ |
| 2 | 2 | ¼ | 1/8 | ½ |
| 3 | 4 | ¼ | 1/8 | ¼ |
| 4 | 4 | ¼ | 1/8 | ½ |
| 5 | 4 | ¼ | ¼ | ¾ |
| 6 | 4 | ½ | ¼ | ½ |
| 7 | 6 | ¼ | - | ½ |
| 8 | 6 | ¼ | - | ¾ |

$L$ is a quantity of selected space domain basis vectors, $\upsilon$ is a quantity of transmission layers, $p_\upsilon$ is used to determine a quantity $M_\upsilon$ of selected frequency domain basis vectors, and $\beta$ is used to determine a maximum value of a quantity of non-zero coefficients that is allowed to be reported by the terminal.

In the foregoing parameter configuration, the terminal device reports an index value to the network side, and the network side may determine the value of L based on the index value. However, this reporting manner can be used only for a space domain basis vector quantity of one specific TRP. For a R18 CJT codebook, a distance difference between a TRP participating in coordination and a terminal device may cause a large channel difference between the TRP participating in coordination and the terminal device. When the terminal device selects a space domain basis vector quantity corresponding to each of TRPs participating in coordination, space domain basis vectors quantities respectively corresponding to different TRPs may differ greatly. The parameter configuration and the reporting manner in the conventional technology cannot enable the network side to obtain a quantity of space domain basis vectors of different TRPs. Further, the network side cannot determine channel states of the different TRPs. Consequently, communication quality is affected.

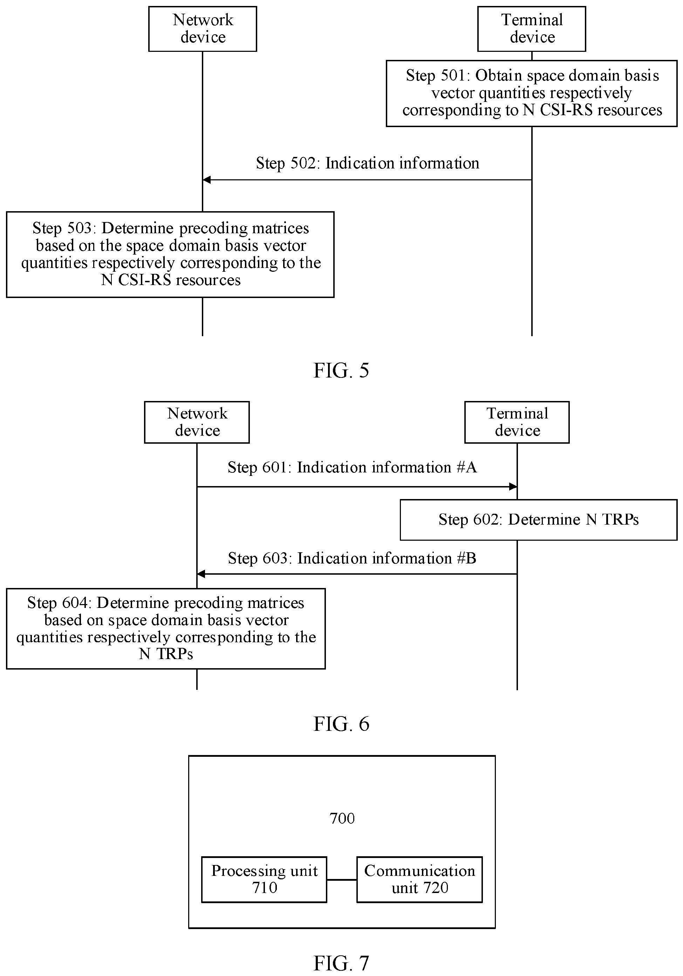

To resolve the foregoing problem, an embodiment of this application provides a channel state parameter reporting method. The method is applicable to a scenario in which a plurality of TRPs perform coordinated communication. After determining a quantity of space domain basis vectors respectively corresponding to the plurality of TRPs, a terminal device reports the quantities to a network device, so that the network device can obtain the quantity of space domain basis vectors respectively corresponding to the plurality of TRPs, and can determine respective precoding matrices of the plurality of TRPs. It should be understood that the communication method is applicable to indication of a quantity of space domain basis vectors respectively corresponding to a plurality of TRPs in a Rel-16 Type-II-based CJT codebook in Rel-18, and is also applicable to indication of quantities that are of selected ports and that respectively correspond to a plurality of TRPs in a Rel-17 Type-II-based CJT codebook in Rel-18. In other words, this solution of this application is applicable to a scenario of value indication of any parameter, for example, a space domain basis vector quantity or a quantity of ports, that can reflect channel state information. This is not limited in this application. It should be further understood that the following describes this solution of this application by using interaction between the terminal device and the network device as an example. However, execution bodies are not limited in this application. For example, this solution of this application is also applicable to interaction between terminal devices, or interaction between network devices. As shown in FIG. 5, the method includes the following steps.

Step 501: The terminal device obtains a quantity of space domain basis vectors respectively corresponding to N CSI-RS resources.

One CSI-RS resource corresponds to one TRP. N TRPs are in one-to-one correspondence with the N CSI-RS resources. It should be noted that "TRP" or "CSI-RS resource" may be used to describe or indicate a TRP. In this embodiment of this application, "TRP" and "CSI-RS resource" may be used interchangeably. The N CSI-RS resources may be determined in Q CSI-RS resources. It may be understood that N is a positive integer less than or equal to Q, and Q is a positive integer greater than or equal to 1. In other words, the Q CSI-RS resources may be considered as a candidate set of CSI-RS resources, and the N CSI-RS resources belong to the Q CSI-RS resources. The Q CSI-RS resources may be predefined in a protocol, or may be indicated by the network device to the terminal device. This is not limited in this application.

Specifically, the terminal device determines the N CSI-RS resources. For example, the terminal device selects the N CSI-RS resources from the Q CSI-RS resources. For example, Q is 4, and the terminal device may select all four CSI-RS resources, or may select a part of the four CSI-RS resources, for example, select three of the four CSI-RS resources. In other words, the terminal device may select all four TRPs as coordinated TRPs, or may select a part of TRPs in the four TRPs as coordinated TRPs. This is not limited in this application.

One CSI-RS resource corresponds to one space domain basis vector quantity. In other words, the terminal device selects a specific quantity of space domain basis vectors for each TRP participating in coordinated transmission. In other words, each TRP participating in coordinated transmission corresponds to a specific quantity of space domain basis vectors.

The following describes this solution by using the TRP as an example.

In a possible manner, a quantity of space domain basis vectors respectively corresponding to the N TRPs are determined based on a sum of a quantity of space domain basis vectors supported by the Q TRPs. For example, a sum of the quantity of space domain basis vectors respectively corresponding to the N TRPs is less than or equal to the sum of the quantity of space domain basis vectors supported by the Q TRPs. The sum of the quantity of space domain basis vectors supported by the Q TRPs may be understood as a sum of a quantity of space domain basis vectors corresponding to the Q TRPs. For example, a value of Q is 4, and the Q TRPs include a TRP #1, a TRP #2, a TRP #3, and a TRP #4. A maximum value of a space domain basis vector quantity supported by each TRP is 6, and a sum of a quantity of space domain basis vectors supported by the four TRPs is 24.

In another possible manner, a quantity of space domain basis vectors respectively corresponding to the N TRPs are determined based on a first parameter. The first parameter indicates a maximum value of a sum of the quantity of space domain basis vectors respectively corresponding to the N TRPs, and the first parameter is less than or equal to a sum of a quantity of space domain basis vectors supported by the Q TRPs. The first parameter may be understood as an upper limit of a quantity of space domain basis vectors selected by the terminal device. A maximum value of the first parameter may be the sum of the quantity of space domain basis vectors supported by the Q TRPs. For example, Q is 4, N is 3, a sum of a quantity of space domain basis vectors supported by four TRPs is 24, and the first parameter may be less than or equal to 24. For example, the first parameter may be 16. When selecting a quantity of space domain basis vectors corresponding to three TRPs, the terminal device needs to ensure that a sum of the quantity of space domain basis vectors corresponding to the three TRPs is less than or equal to 16. For example, the three TRPs are a TRP #1, a TRP #2, and a TRP #3. The TRP #1 corresponds to a space domain basis vector quantity of 4, the TRP #2 corresponds to a space domain basis vector quantity of 6, and the TRP #3 corresponds to a space domain basis vector quantity of 6. Alternatively, the TRP #1 corresponds to a space domain basis vector quantity of 6, the TRP #2 corresponds to a space domain basis vector quantity of 2, and the TRP #3 corresponds to a space domain basis vector quantity of 4. In conclusion, the sum of the quantity of space domain basis vectors corresponding to the three TRPs is less than or equal to 16.

Optionally, the first parameter may be determined based on configuration information. For example, the network device sends the configuration information to the terminal device. Correspondingly, the terminal device receives the configuration information. The configuration information indicates at least one of the following:

the first parameter;
an average value of a quantity of space domain basis vectors supported by the N TRPs; and
an average value of the quantity of space domain basis vectors supported by the Q TRPs.

When the configuration information indicates the first parameter, the configuration information may directly indicate a value of the first parameter, or may indicate an index corresponding to the value of the first parameter. For example, the first parameter may have a plurality of candidate values, and each candidate value corresponds to one index. The terminal device may determine the first parameter based on the configuration information.

When the configuration information indicates the average value of the quantity of space domain basis vectors supported by the N TRPs, it should be understood that the network device indicates the average value when N is not determined, and the terminal device may determine the sum of the quantity of space domain basis vectors based on the average value and a value of N selected by the terminal device. In other words, in this case, the sum of the quantity of space domain basis vectors is variable, for example, varies based on the value of N. The terminal device can determine a value of the first parameter based on the average value and a quantity N of selected TRPs. For example, N is 2, and an average value of a quantity of space domain basis vectors supported by two TRPs is 4. In this case, the terminal device may determine that the first parameter is 8.

That the configuration information indicates the average value of the quantity of space domain basis vectors supported by the Q TRPs may be understood as that the network device specifies a sum of a quantity of space domain basis vectors of the Q TRPs, which is equivalent to that an upper limit of the sum of the quantity of space domain basis vectors of the N TRPs is determined, and the upper limit does not change with a value of N. The terminal device can determine a value of the first parameter based on the average value and a quantity Q of configured TRPs. For example, Q is 4, and an average value of a quantity of space domain basis vectors supported by four TRPs is 2. In this case, the terminal device may determine that the first parameter is 8.

The average value may be determined by the network device. Optionally, the network device may determine the average value with reference to a value in an average value candidate set. Optionally, the network device may determine the average value with reference to a space domain basis vector quantity candidate set.

The following describes in detail a manner in which the terminal device obtains the quantity of space domain basis vectors respectively corresponding to the N channel state information reference signal resources TRPs.

Manner 1: The terminal device obtains, based on the first parameter and a space domain basis vector quantity value candidate set, the quantity of space domain basis vectors respectively corresponding to the N TRPs. The space domain basis vector quantity value candidate set may be understood as a candidate value that can be selected for the space domain basis vector quantity, and is not necessarily presented in a form of a set. In a possible implementation, the space domain basis vector quantity value candidate set is $\mathcal{L} = \{1, 2, 4, 6\}$, indicating that a value of the space domain basis vector quantity may be 1, 2, 4, or 6. This set is used as an example for a space domain basis vector quantity value candidate set in the following descriptions. However, it should be understood that the space domain basis vector quantity value candidate set is not limited thereto. For example, the set may be $\mathcal{L} = \{2, 4, 6\}$ or $\mathcal{L} = \{1, 2, 4, 6, 8\}$. The space domain basis vector quantity value candidate set may be predefined in the protocol, may be preconfigured, or may be indicated. This is not limited in this application.

Optionally, a space domain basis vector quantity corresponding to each TRP may be determined in the space domain basis vector quantity value candidate set. For example, when the value of N is 3, three TRPs are a TRP #1, a TRP #2, and a TRP #3. A space domain basis vector quantity corresponding to each TRP has four optional values: 1, 2, 4, and 6.

Further, the terminal device may determine, based on the first parameter and the space domain basis vector quantity value candidate set, the quantity of space domain basis vectors respectively corresponding to the N TRPs. For example, the value of the first parameter is 16, the space domain basis vector quantity value candidate set is $L = \{1, 2, 4, 6\}$, and the value of N is 3. Three TRPs are a TRP #1, a TRP #2, and a TRP #3. A space domain basis vector quantity corresponding to each TRP has four optional values: 1, 2, 4, and 6. However, considering that a sum of a quantity of space domain basis vectors corresponding to the three TRPs needs to be less than or equal to the first parameter, that is, 16, at least the quantity of space domain basis vectors corresponding to the three TRPs cannot be all 6. For example, a space domain basis vector quantity corresponding to the TRP #1 may be 6, a space domain basis vector quantity corresponding to the TRP #2 may be 6, a space domain basis vector quantity corresponding to the TRP #3 may be 4, and the sum of the quantity of space domain basis vectors corresponding to the three TRPs is 16, meeting the requirement of being less than or equal to 16. Alternatively, a space domain basis vector quantity corresponding to the TRP #1 may be 2, a space domain basis vector quantity corresponding to the TRP #2 may be 6, a space domain basis vector quantity corresponding to the TRP #3 may be 4, and the sum of the quantity of space domain basis vectors corresponding to the three TRPs is 12, meeting the requirement of being less than or equal to 16. It should be understood that there are a plurality of other value selection manners, and the manners are not listed one by one herein.

In other words, in the manner 1, when a condition that the sum of the quantity of space domain basis vectors respectively corresponding to the N TRPs is less than or equal to the first parameter is met, a specific space domain basis vector quantity corresponding to a specific TRP may be autonomously determined by the terminal device based on a channel measurement result.

Manner 2: The terminal device obtains, based on the first parameter and a first correspondence, the quantity of space domain basis vectors respectively corresponding to the N TRPs.

For the first parameter, refer to the foregoing descriptions. Details are not described herein again. The first correspondence is a correspondence between a first index and the quantity of space domain basis vectors respectively corresponding to the N TRPs. For example, the value of N is 2, and two TRPs are a TRP #1 and a TRP #2. A space domain basis vector quantity corresponding to the TRP #1 is 6, and a space domain basis vector quantity corresponding to the TRP #2 is 4. Space domain basis vector quantities respectively corresponding to the two TRPs may be considered as a value combination, and the value combination may correspond to one index, for example, an index 0. In other words, the index 0 can represent that the space domain basis vector quantity corresponding to the TRP #1 is 6, and the space domain basis vector quantity corresponding to the TRP #2 is 4.

In a possible implementation, the first correspondence belongs to a second correspondence, the second correspondence includes at least two correspondences, the at least two correspondences include at least two indexes, the at least two indexes include a second index and a third index, a value of the second index is less than a value of the third index, and a sum of a quantity of space domain basis vectors that respectively correspond to the N TRPs and that correspond to the second index is less than a sum of a quantity of space domain basis vectors that respectively correspond to the N TRPs and that correspond to the third index. For example, the value of N is 2, and two TRPs are a TRP #1 and a TRP #2. There are two optional value combinations. One value combination is as follows: A space domain basis vector quantity corresponding to the TRP #1 is 6, a space domain basis vector quantity corresponding to the TRP #2 is 4, and a corresponding index #1 is 0. The other value combination is as follows: A space domain basis vector quantity corresponding to the TRP #1 is 6, a space domain basis vector quantity corresponding to the TRP #2 is 6, and a corresponding index #2 is 1.

It should be understood that the value of the index, the value of N, and the space domain basis vector quantity are merely used as examples rather than limitations.

It should be further understood that the first correspondence and/or the second correspondence may be determined by the network device, may be determined by the terminal device, may be predefined in the protocol, or may be indicated. For example, the network device indicates the first correspondence and/or the second correspondence to the terminal device. This is not limited in this embodiment of this application.

In a possible implementation, the second correspondence may be presented in a form of a table. For example, the second correspondence is shown in Table 2 to Table 5.

Table 2 Correspondence between an index and a value of a space domain basis vector quantity when N=1

| Index | $L_1$ |
| --- | --- |
| 0 | 1 |
| 1 | 2 |
| 2 | 4 |
| 3 | 6 |

Table 3 Correspondence between an index and values of a quantity of space domain basis vectors when N=2

| Index | $L_1$ | $L_2$ |
| --- | --- | --- |
| 0 | 1 | 1 |
| 1 | 2 | 1 |
| 2 | 1 | 2 |
| 3 | 2 | 2 |
| 4 | 4 | 1 |
| 5 | 1 | 4 |
| 6 | 4 | 2 |
| 7 | 2 | 4 |
| 8 | 6 | 1 |
| 9 | 1 | 6 |
| 10 | 4 | 4 |
| 11 | 2 | 6 |
| 12 | 6 | 2 |
| 13 | 6 | 4 |
| 14 | 4 | 6 |
| 15 | 6 | 6 |

Table 4 Correspondence between an index and values of a quantity of space domain basis vectors when N=3

| Index | $L_1$ | $L_2$ | $L_3$ |
| --- | --- | --- | --- |
| 0 | 1 | 1 | 1 |
| 1 | 2 | 1 | 1 |
| 2 | 1 | 2 | 1 |
| 3 | 1 | 1 | 2 |
| 4 | 2 | 2 | 1 |
| 5 | 2 | 1 | 2 |
| 6 | 1 | 2 | 2 |
| 7 | 2 | 2 | 2 |
| ... | ... | ... | ... |

(continued)

| Index | $L_1$ | $L_2$ | $L_3$ |
|---|---|---|---|
| 60 | 6 | 6 | 4 |
| 61 | 6 | 4 | 6 |
| 62 | 4 | 6 | 6 |
| 63 | 6 | 6 | 6 |

Table 5 Correspondence between an index and values of a quantity of space domain basis vectors when N=4

| Index | $L_1$ | $L_2$ | $L_3$ | $L_4$ |
|---|---|---|---|---|
| 0 | 1 | 1 | 1 | 1 |
| 1 | 2 | 1 | 1 | 1 |
| 2 | 1 | 2 | 1 | 1 |
| 3 | 1 | 1 | 2 | 1 |
| 4 | 1 | 1 | 1 | 2 |
| 5 | 2 | 2 | 1 | 1 |
| 6 | 2 | 1 | 2 | 1 |
| 7 | 2 | 1 | 1 | 2 |
| 8 | 1 | 2 | 2 | 1 |
| 9 | 1 | 2 | 1 | 2 |
| 10 | 1 | 1 | 2 | 2 |
| ... | ... | ... | ... | ... |
| 251 | 6 | 6 | 6 | 4 |
| 252 | 6 | 6 | 4 | 6 |
| 253 | 6 | 4 | 6 | 6 |
| 254 | 4 | 6 | 6 | 6 |
| 255 | 6 | 6 | 6 | 6 |

In the foregoing Table 2 to Table 5, $L_1$, $L_2$, $L_3$, and $L_4$ represent a quantity of space domain basis vectors corresponding to different TRPs. For brevity of the application document, not all value combinations are listed one by one in the table, and ellipses are used for replacement.

In a possible implementation, it may be found in the foregoing tables that a sum of values of a value combination corresponding to an index with a larger value is greater than a sum of values of a value combination corresponding to an index with a smaller value. Simply speaking, a large index corresponds to a large sum of a quantity of space domain basis vectors, and a small index corresponds to a small sum of a quantity of space domain basis vectors. Table 5 is used as an example. Values corresponding to an index 254 are 4, 6, 6, and 6, and a sum of the four values is 22. Values corresponding to an index 255 are 6, 6, 6, and 6, and a sum of the four values is 24. 254 is less than 255, and 22 is less than 24. It should be noted that when sums of values are the same, a value relationship between indexes is not limited. Table 5 is used as an example. A sum of values corresponding to an index 251 to a sum of the values corresponding to the index 254 are all 22. The indexes may be replaced with each other. For example, 251 may correspond to a value combination 4, 6, 6, and 6. In other words, row sequences of combinations with a same sum of values may be interchanged. This is not limited herein. It can be learned from herein that the table includes all possible value combinations, and the terminal device may autonomously select, from the table, the quantity of space domain basis vectors respectively corresponding to the N TRPs.

It should be understood that Table 2 to Table 5 are merely used as an example rather than a limitation. For example, during specific application, only a part of the table is used for implementation. For example, to reduce overheads, only a part of the table may be used for implementation, where the part may be several consecutive rows, or may be several inconsecutive rows. This is not limited.

It should be further understood that Table 2 to Table 5 may be determined by the network device, may be determined by the terminal device, may be predefined in the protocol, or may be indicated. For example, the network device determines Table 2 to Table 5, and indicates Table 2 to Table 5 to the terminal device. This is not limited in this embodiment of this application. In conclusion, the foregoing correspondence needs to be known to both the network device and the terminal device. In this way, when an index is indicated, the network device and the terminal device can determine content corresponding to the index.

Step 502: The terminal device sends indication information to the network device. Correspondingly, the network device receives the indication information.

The indication information indicates the quantity of space domain basis vectors respectively corresponding to the N TRPs.

The following describes in detail indication manners, of the terminal device, corresponding to different manners in which the terminal device obtains the quantity of space domain basis vectors respectively corresponding to the N TRPs in step 501.

Manner 1: In correspondence to the manner 1 in step 502, the indication information may include first indication information and second indication information, where the first indication information indicates the sum of the quantity of space domain basis vectors respectively corresponding to the N TRPs, and the second indication information indicates the quantity of space domain basis vectors respectively corresponding to the N TRPs. Optionally, the second indication information may indicate space domain basis vectors respectively corresponding to the N TRPs, and the network device may determine the quantity of space domain basis vectors respectively corresponding to the N TRPs after receiving the second indication information.

In a possible implementation, the second indication information is a combination number formed by a plurality of bits. The sum of the quantity of space domain basis vectors respectively corresponding to the N TRPs may be used to determine overheads of the second indication information. For example, a quantity B of bits of the second indication information may be determined based on the sum $L_{tot}$ of the quantity of space domain basis vectors respectively corresponding to the N TRPs, the value of N, and a value of P, where P is a quantity of CSI-RS ports of any one of the N TRPs.

In a possible manner, $B = \left\lceil \log 2 \binom{NP/2}{L_{tot}} \right\rceil \cdot \binom{NP/2}{L_{tot}}$ represents a quantity of all possibilities of selecting $L_{tot}$ numbers from NP/2 numbers.

For example, N is 2, P is 8, $L_{tot}$ is 4, and a space domain basis vector complete set includes four optional basis vectors. In this case, there are a total of 70 possibilities of selecting four basis vectors from eight basis vectors, and B is equal to 7. In other words, the second indication information includes seven bits, and the seven bits may clearly indicate all selection solutions (that is, the 70 possibilities) of space domain basis vectors respectively corresponding to two TRPs. The second indication information may indicate one of the selection solutions. In other words, the terminal device indicates one basis vector selection solution to the network device. For example, the eight basis vectors are a basis vector #1, a basis vector #2, a basis vector #3, a basis vector #4, the basis vector #1, the basis vector #2, the basis vector #3, and the basis vector #4, and there may be 70 basis vector combinations. Only several of the basis vector combinations are provided herein.

For example, a 1st selected TRP corresponds to the basis vector #1 and the basis vector #2, and a 2nd selected TRP corresponds to the basis vector #1 and the basis vector #2, which may be indicated by using 0000001; or a 1st selected TRP corresponds to the basis vector #1, and a 2nd selected TRP corresponds to the basis vector #4, the basis vector #1, and the basis vector #3, which may be indicated by using 0000010.

If the second indication information is 0000010, the network device may determine, based on the indication information, that a basis vector corresponding to the 1st selected TRP is the basis vector #1, and basis vectors corresponding to the 2nd selected TRP are the basis vector #4, the basis vector #1, and the basis vector #3.

The terminal device may further indicate the N selected TRPs to the network device by using the indication information. For example, the terminal device may indicate the N TRPs in the Q TRPs by using a bitmap. For example, Q is 4, and N is 2. In this case, the bitmap may include four bits. A value of each bit indicates whether a TRP is selected. For example, the bitmap is 0101, indicating that two selected TRPs determined by the terminal device are a TRP #2 and a TRP #4.

In this way, the network device may determine, with reference to the indication information 0000010 indicating the basis vectors and the bitmap, the space domain basis vectors corresponding to the two TRPs, and further determine a quantity of space domain basis vectors respectively corresponding to the two TRPs. For example, the bitmap is 0101, indicating that the two selected TRPs are a TRP #2 and a TRP #4, and the TRP #2 is in front and serves as the 1st selected TRP. In this case, the TRP #2 corresponds to the basis vector #1, and the TRP #4 corresponds to the basis vector #4, the basis vector #1, and the basis vector #3. Further, the network device may determine that a space domain basis vector quantity corresponding to the TRP #2 is 1, and a space domain basis vector quantity corresponding to the TRP #4 is 3.

Optionally, the first indication information may be a first part of CSI (CSI part 1), and the second indication information may be a second part of the CSI (CSI part 2).

In this manner, the terminal device indicates the selected space domain basis vector to the network device, so that the network device can determine the quantity of space domain basis vectors respectively corresponding to the N TRPs. In this way, no additional reporting is required, and therefore indication overheads are reduced.

Manner 2: In correspondence to the manner 1 in step 502, the indication information #A may include $Q*\lceil log2(Y)\rceil$ bits. First $N*\lceil log2(Y)\rceil$ bits or last $N*\lceil log2(Y)\rceil$ bits of the indication information indicate the quantity of space domain basis vectors respectively corresponding to the N TRPs. Every $\lceil log2(Y)\rceil$ bits in the first $N*\lceil log2(Y)\rceil$ bits or last $N*\lceil log2(Y)\rceil$ bits of the indication information correspond to an index of one space domain basis vector quantity in the space domain basis vector quantity value candidate set, where Y is a quantity of elements included in the space domain basis vector quantity value candidate set.

For example, a value of Q is 4, the value of N is 2, the space domain basis vector quantity value candidate set is $\mathcal{L}$ = {1, 2, 4, 6}, and Y is 4. In this case, the indication information may include eight bits. First four bits or last four bits of the indication information indicate a quantity of space domain basis vectors respectively corresponding to two TRPs. Optionally, in $\mathcal{L}$ = {1, 2, 4, 6}, the value 1 corresponds to an index 0, the value 2 corresponds to an index 1, the value 4 corresponds to an index 2, and the value 6 corresponds to an index 3. The following uses the first four bits as an example. The indication information is 0100XXXX. 01 indicates that an index of a space domain basis vector quantity corresponding to a 1st TRP in the space domain basis vector quantity value candidate set is 1, in other words, the space domain basis vector quantity corresponding to the 1st TRP is 2. 01 indicates that an index of a space domain basis vector quantity corresponding to a 2nd TRP in the space domain basis vector quantity value candidate set is 0, in other words, the space domain basis vector quantity corresponding to the 2nd TRP is 1. Currently, a specific TRP whose corresponding space domain basis vector quantity is 1 and a specific TRP whose corresponding space domain basis vector quantity is 2 cannot be determined. A value of another bit may be customized. For example, XXXX may be 0000, or all bits of XXXX may be set to 1. For example, XXXX may be 1111. This is not limited in this application. The network device may not parse a bit that does not have an indication meaning.

The terminal device may further indicate the two determined TRPs to the network device by using the indication information. In other words, the terminal device may further indicate, to the network device by using the indication information, which two TRPs are the two determined TRPs. The indication information may include a bitmap. For details, refer to the descriptions of the bitmap in the manner 1. Details are not described herein again. For example, the bitmap is 0101. In this case, the network device may determine that a space domain basis vector quantity corresponding to a TRP #2 is 2, and a space domain basis vector quantity corresponding to a TRP #4 is 1.

Manner 3: In correspondence to the manner 1 in step 502, the indication information #B may include $Q*\lceil log2(Y)\rceil$ bits, the $Q*\lceil log2(Y)\rceil$ bits are divided into Q groups, any one of the Q groups includes $\lceil log2(Y)\rceil$ bits, the Q groups respectively correspond to the Q TRPs, N groups of bits corresponding to the N TRPs respectively indicate indexes of the quantity of space domain basis vectors respectively corresponding to the N TRPs in the space domain basis vector quantity value candidate set, and Y is a quantity of elements included in the space domain basis vector quantity value candidate set.

For example, a value of Q is 4, the value of N is 2, the space domain basis vector quantity value candidate set is $\mathcal{L}$ = {1, 2, 4, 6}, and Y is 4. In this case, the indication information may include eight bits. Optionally, in $\mathcal{L}$ = {1, 2, 4, 6}, the value 1 corresponds to an index 0, the value 2 corresponds to an index 1, the value 4 corresponds to an index 2, and the value 6 corresponds to an index 3. The eight bits are divided into four groups, and two bits in each group indicate an index of a space domain basis vector quantity corresponding to one TRP in the space domain basis vector quantity value candidate set. For example, the eight bits are 00010011.

The terminal device may further indicate two determined TRPs to the network device by using the indication information. In other words, the terminal device may further indicate, to the network device by using the indication information, which two TRPs are the two determined TRPs. The indication information may include a bitmap. For details, refer to the descriptions of the bitmap in the manner 1. Details are not described herein again. For example, the bitmap is 0101. In this case, the network device may determine that the TRPs selected by the terminal device are a TRP #2 and a TRP #4.

The network device may determine, with reference to the bitmap and the eight bits, a quantity of space domain basis vectors respectively corresponding to the two TRPs. In 00010011, 01 indicates that an index of a space domain basis vector quantity corresponding to the TRP #2 in the space domain basis vector quantity value candidate set is 1, in other words, the space domain basis vector quantity corresponding to the TRP #2 is 2; and 11 indicates that an index of a space domain basis vector quantity corresponding to the TRP #4 in the space domain basis vector quantity value candidate set is 3, in other words, the space domain basis vector quantity corresponding to the TRP #4 is 6.

It should be understood that in the foregoing example 00010011, first two bits 00 and 5th and 6th bits 00 have no meaning, and the first two bits 00 and the 5th and 6th bits 00 correspond to locations of unselected TRPs. In other words, a value of a bit corresponding to an unselected TRP may be customized, for example, may be set to 0, or may be set to 1. This is not limited in this application. The network device may not parse a bit that does not have an indication meaning.

Optionally, the indication information in the manner 2 and the indication information in the manner 3 each may be carried in a CSI part 1.

Manner 4: In correspondence to the manner 2 in step 502, the indication information may indicate the index in the first correspondence.

For example, when the first correspondence and the second correspondence are in a form of a table, the indication information may indicate an index in the table. For example, the value of N is 2. In this case, the indication information may indicate a specific index in Table 3, and the index corresponds to a value combination.

In a possible implementation, overheads occupied by the index are $\lceil \log 2(X) \rceil$, and $X = \max\{X_1, \ldots, X_N\}$. $X_n$ is a quantity of rows that meet $L_{tot} = \sum_{n=1}^{N} L_n \leq L_{max}$ in a table corresponding to N=n (all first $X_n$ rows in the table meet $L_{tot} = \sum_{n=1}^{N} L_n \leq L_{max}$). $L_n$ is a space domain basis vector quantity corresponding to each TRP, and $L_{max}$ is the first parameter.

In the table design in the manner 2 in step 501, rows are arranged in ascending order of values of $L_{tot} = \sum_{n=1}^{N} L_n$. When the network device completes configuration of $L_{max}$, the terminal device may use a part of the table predefined in the protocol when reporting a value combination of $L_n$. Therefore, overheads of reporting the index in the indication information are reduced. $L_{max} = 4$ is used as an example. In the four tables, first three rows in Table 2, first four rows in Table 3, first four rows in Table 4, and a 1st row in Table 5 meet the constraint of $L_{tot} = \sum_{n=1}^{N} L_n \leq L_{max}$, that is, $X_1$=3, $X_2$=4, $X_3$=4, and $X_4$=1. In this case, $X = \max\{X_1, \ldots, X_N\} = 4$, and $\lceil \log 2(X) \rceil = 2$ bits, rather than an actual dimension of the table (with maximum overheads of $\lceil \log 2(4^4) \rceil = 8$ bits), are required in the indication information to indicate the value combination of $L_n$, so that reporting overheads can be reduced.

The terminal device may further indicate two determined TRPs to the network device by using the indication information. In other words, the terminal device may further indicate, to the network device by using the indication information, which two TRPs are the two determined TRPs. The indication information may include a bitmap. For details, refer to the descriptions of the bitmap in the manner 1. Details are not described herein again. For example, the bitmap is 0101. In this case, the network device may determine that the TRPs selected by the terminal device are a TRP #2 and a TRP #4.

With reference to the indication information and the bitmap, the network device may determine a quantity of space domain basis vectors respectively corresponding to the TRP #2 and the TRP #4.

Optionally, in the manner 1 to the manner 4, the bitmap may be carried in the first indication information.

It should be understood that the value, the correspondence, the index, the bitmap, and the like in this application are merely used as examples rather than limitations.

Step 503: The network device determines precoding matrices based on the quantity of space domain basis vectors respectively corresponding to the N CSI-RS resources.

Specifically, for a manner of determining the precoding matrices by the network device, refer to the foregoing descriptions. Details are not described herein again.

In the method, after determining the quantity of space domain basis vectors respectively corresponding to the plurality of TRPs, the terminal device reports the quantities to the network device, so that the network device can obtain the quantity of space domain basis vectors respectively corresponding to the plurality of TRPs, and can determine the respective precoding matrices of the plurality of TRPs. In this way, the network device can obtain an accurate channel state, and therefore communication quality is improved.

An embodiment of this application provides another channel state parameter reporting method. In the communication method, a network device configures a space domain basis vector quantity corresponding to each TRP, and a terminal device autonomously determines a TRP. The method is shown in FIG. 5, and may include the following steps.

Step 601: The network device sends indication information #A to the terminal device. Correspondingly, the terminal device receives the indication information #A.

The indication information #A indicates a quantity of space domain basis vectors corresponding to Q TRPs. Optionally, the indication information #A may be configuration information.

In a possible implementation A, the configuration information indicates a third correspondence. The third correspondence is a correspondence between an index and a space domain basis vector quantity corresponding to each TRP.

Optionally, the third correspondence belongs to a fourth correspondence. The fourth correspondence may be determined by the network device, predefined in a protocol, or preconfigured. This is not limited in this application.

In a possible case, the fourth correspondence may be presented in a form of a table, for example, as shown in Table 6 to Table 9.

Table 6 Correspondence between an index and a value of a space domain basis vector quantity when Q=1

| Index | $L_1$ |
|---|---|
| 0 | 1 |
| 1 | 2 |
| 2 | 4 |
| 3 | 6 |

Table 7 Correspondence between an index and values of a quantity of space domain basis vectors when Q=2

| Index | $L_1$ | $L_2$ |
|---|---|---|
| 0 | 1 | 1 |
| 1 | 2 | 1 |
| 2 | 2 | 2 |
| 3 | 4 | 1 |
| 4 | 4 | 2 |
| 5 | 1 | 6 |
| 6 | 2 | 6 |
| 7 | 6 | 4 |
| 8 | 6 | 6 |

Table 8 Correspondence between an index and values of a quantity of space domain basis vectors when Q=3

| Index | $L_1$ | $L_2$ | $L_3$ |
|---|---|---|---|
| 0 | 1 | 1 | 1 |
| 1 | 1 | 2 | 1 |
| 2 | 2 | 2 | 1 |
| 3 | 2 | 2 | 2 |
| ... | ... | ... | ... |

Table 9 Correspondence between an index and values of a quantity of space domain basis vectors when Q=4

| Index | $L_1$ | $L_2$ | $L_3$ | $L_4$ |
|---|---|---|---|---|
| 0 | 1 | 1 | 1 | 1 |
| 1 | 2 | 1 | 1 | 1 |
| 2 | 2 | 2 | 1 | 1 |
| ... | ... | ... | ... | ... |

It should be understood that, for brevity, not all value combinations are listed one by one in Table 6 to Table 9. It should be understood that values in the foregoing tables are merely used as an example rather than a limitation. In other words, the network device configures correspondences in correspondence to different values of Q.

The indication information #A may indicate a specific row (an example of the third correspondence) in the foregoing tables to the terminal device. A value of Q is known to both the network device and the terminal device.

Table 9 is used as an example. When Q=4, the network device may indicate an index 2 to the terminal device (that is, the indication information #A indicates the index 2). In this case, it is equivalent to that the network device indicates, to the terminal device, that values of $L_1$, $L_2$, $L_3$, and $L_4$ are respectively 2, 2, 1, and 1.

In another possible implementation B, the network device sequentially configures values of the quantity of space domain basis vectors corresponding to the Q TRPs. In a possible manner, the network device sends indication information to the terminal device, where the indication information indicates an index of a space domain basis vector quantity corresponding to each TRP in a space domain basis vector quantity value candidate set. For details, refer to the descriptions in the manner 2 in step 402. Details are not described herein again.

Step 602: The terminal device determines N TRPs.

Optionally, the N TRPs are determined in the Q TRPs. For details, refer to related descriptions in step 601. Details are not described herein again.

Step 603: The terminal device sends indication information #B to the network device. Correspondingly, the network device receives the indication information #B.

Because the network device has configured the space domain basis vector quantity corresponding to each TRP, after determining the N TRPs, the terminal device only needs to indicate, to the network device, which TRPs are the N TRPs. The indication information #B indicates the N TRPs in step 502.

In a possible manner, the indication information #B is a bitmap. The bitmap indicates the N TRPs. A quantity of bits of the bitmap is related to Q. For details, refer to the descriptions of the bitmap in step 402. Details are not described herein again.

The network device determines the N TRPs based on the indication information #B, and may further determine a quantity of space domain basis vectors respectively corresponding to the N TRPs.

For example, the indication information #B is 0101, and the network device may determine, based on the indication information #B, that there are two TRPs: a TRP #2 and a TRP #4. In addition, because a quantity of space domain basis vectors respectively corresponding to four (in this case, Q is 4) TRPs are configured by the network device (for example, in the implementation A or implementation B in step 601), the network device may directly determine a quantity of space domain basis vectors respectively corresponding to the TRP #2 and the TRP #4. In other words, the network device determines that a space domain basis vector quantity corresponding to the TRP #2 is $L_2$ with a value 2, and a space domain basis vector quantity corresponding to the TRP #4 is $L_4$ with a value 1.

Step 604: The network device determines precoding matrices based on the quantity of space domain basis vectors respectively corresponding to the N TRPs.

Specifically, for a manner of determining the precoding matrices by the network device, refer to the foregoing descriptions. Details are not described herein again.

It should be understood that the space domain basis vector quantity is used as an example in the foregoing solution descriptions, but this application is not limited thereto. For example, a case in which the space domain basis vector is replaced with a quantity of ports is also applicable to the method, and only related values change.

In the method, after determining a quantity of space domain basis vectors respectively corresponding to a plurality of TRPs, the terminal device reports the quantities to the network device, so that the network device can obtain the quantity of space domain basis vectors respectively corresponding to the plurality of TRPs, and can determine respective precoding matrices of the plurality of TRPs. In addition, in this manner, the terminal device only needs to report the N selected TRPs, so that overheads are further reduced.

Embodiments described in this specification may be independent solutions, or may be combined based on internal logic. All of these solutions fall within the protection scope of this application. It should be understood that the steps in the foregoing embodiments are merely intended to clearly describe the technical solutions of embodiments, and a sequence of performing the steps is not limited.

In the foregoing embodiments provided in this application, the method provided in embodiments of this application is described from a perspective of interaction between devices. To implement functions in the method provided in the foregoing embodiments of this application, the network device or the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, division into the modules is an example and is merely logical function division, and may be other division during actual implementation. In addition, functional modules in embodiments of this application may be integrated into one processor, or may exist alone physically, or two or more modules may be integrated into one module. The integrated module may be implemented in a form of hardware, or may be implemented in a form of a software functional module.

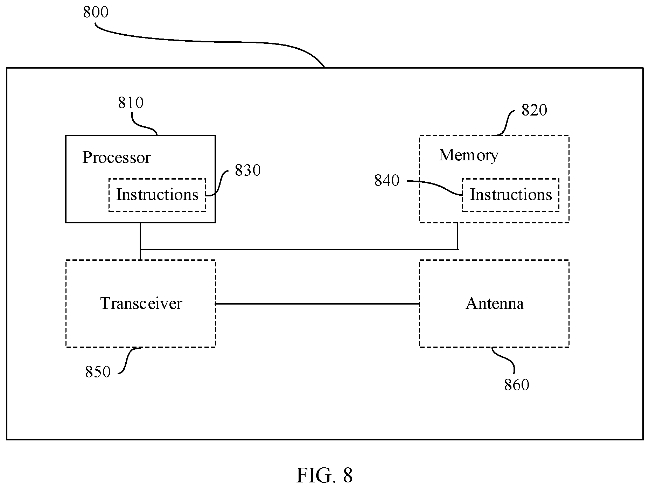

The following describes in detail communication apparatuses provided in embodiments of this application with reference to FIG. 7 and FIG. 8. It should be understood that descriptions of apparatus embodiments correspond to the descriptions of the method embodiments. Therefore, for content that is not described in detail, refer to the foregoing method embodiments. For brevity, details are not described herein again.

Same as the foregoing concept, as shown in FIG. 7, an embodiment of this application provides a communication apparatus 700, configured to implement a function of the terminal device or the network device in the foregoing method.

For example, the apparatus may be a software module or a chip system. In this embodiment of this application, the chip system may include a chip, or may include a chip and another discrete component. The apparatus 700 may include a processing unit 710 and a communication unit 720.

In this embodiment of this application, the communication unit may also be referred to as a transceiver unit or a transceiver module, and may include a sending unit and/or a receiving unit, respectively configured to perform a sending step and a receiving step of the sensing node in the foregoing method embodiments.

The communication unit may also be referred to as a transceiver, a transceiver machine, a transceiver apparatus, or the like. The processing unit may also be referred to as a processor, a processing board, a processing module, a processing apparatus, or the like. Optionally, a component that is in the communication unit 720 and that is configured to implement a receiving function may be considered as a receiving unit, and a component that is in the communication unit 720 and that is configured to implement a sending function may be considered as a sending unit. That is, the communication unit 720 includes the receiving unit and the sending unit. The communication unit sometimes may also be referred to as a transceiver machine, a transceiver, an interface circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus 700 performs a function of the terminal device in the method shown in FIG. 5 in the foregoing embodiment:

The processing unit is configured to obtain a quantity of space domain basis vectors respectively corresponding to N channel state information reference signal resources TRPs.

In a possible manner, the processing unit is configured to obtain, based on a first parameter and a space domain basis vector quantity value candidate set, the quantity of space domain basis vectors respectively corresponding to the N TRPs. The first parameter indicates a maximum value of a sum of the quantity of space domain basis vectors respectively corresponding to the N TRPs, and the first parameter is less than or equal to a sum of a quantity of space domain basis vectors supported by the Q TRPs.

In a possible manner, the processing unit is configured to obtain, based on the first parameter and a first correspondence, the quantity of space domain basis vectors respectively corresponding to the N TRPs. The first correspondence is a correspondence between a first index and the quantity of space domain basis vectors respectively corresponding to the N TRPs.

In a possible manner, the processing unit is configured to obtain, based on a third correspondence, the quantity of space domain basis vectors respectively corresponding to the N TRPs. The third correspondence is a correspondence between an index and a space domain basis vector quantity corresponding to each TRP. The third correspondence may be determined by a network device.

Specifically, the processing unit may perform the manner of obtaining the quantity of space domain basis vectors respectively corresponding to the N TRPs in the steps shown in FIG. 5. Details are not described herein again.

The communication unit is configured to receive indication information, where the indication information indicates the quantity of space domain basis vectors respectively corresponding to the N TRPs.

In a possible manner, the indication information may include first indication information and second indication information, where the first indication information indicates the sum of the quantity of space domain basis vectors respectively corresponding to the N TRPs, and the second indication information indicates the quantity of space domain basis vectors respectively corresponding to the N TRPs.

Optionally, the second indication information may indicate space domain basis vectors corresponding to the N TRPs.

In a possible manner, the indication information may indicate the index in the first correspondence.

In a possible manner, the indication information includes a bitmap, and the bitmap indicates the N TRPs.

Specifically, the communication unit may perform the manner of sending the indication information in the steps shown in FIG. 5. Details are not described herein again.

When the communication apparatus 700 performs a function of the network device in the method shown in FIG. 5 in the foregoing embodiment:

The communication unit is configured to receive indication information, where the indication information indicates a quantity of space domain basis vectors respectively corresponding to N TRPs.

The processing unit is configured to determine, based on the indication information, the quantity of space domain basis vectors respectively corresponding to the N TRPs.

The foregoing descriptions are merely an example. The processing unit 710 and the communication unit 720 may further perform other functions. For more detailed descriptions, refer to related descriptions in the method embodiment shown in FIG. 5 or FIG. 6 or another method embodiment. Details are not described herein.

FIG. 8 shows a communication apparatus 800 according to an embodiment of this application. The apparatus shown in FIG. 8 may be an implementation of a hardware circuit of the apparatus shown in FIG. 7. The communication apparatus is applicable to the foregoing flowcharts, and performs a function of the terminal device or the network device in the foregoing method embodiments. For ease of description, FIG. 8 shows only main components of the communication apparatus.

The communication apparatus 800 may be a terminal device, and can implement a function of the terminal device in the method provided in embodiments of this application. Alternatively, the communication apparatus 800 may be an apparatus that can support the terminal device in implementing a corresponding function in the method provided in embodiments of this application. The communication apparatus 800 may be a network device, and can implement a function of the network device in the method provided in embodiments of this application. Alternatively, the communication apparatus 800 may be an apparatus that can support the network device in implementing a corresponding function in the method provided in embodiments of this application. The communication apparatus 800 may be a chip system. In this embodiment of this application, the chip system may include a chip, or may include a chip and another discrete component. For a specific function, refer to descriptions in the method embodiments.

The communication apparatus 800 includes one or more processors 810, configured to implement or support the communication apparatus 800 in implementing the function of the terminal device or the network device in the method provided in embodiments of this application. For details, refer to detailed descriptions in the method example. Details are not described herein again. The processor 810 may also be referred to as a processing unit or a processing module, and may implement a specific control function. The processor 810 may be a general-purpose processor, a dedicated processor, or the like. For example, the processor 810 includes a central processing unit, a baseband processor, an application processor, a modem processor, a graphics processing unit, an image signal processor, a digital signal processor, a video codec processor, a controller, and/or a neural-network processing unit. The central processing unit may be configured to control the communication apparatus 800, execute a software program, and/or process data. Different processors may be independent components, or may be integrated into one or more processors, for example, integrated into one or more application-specific integrated circuits. It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

Optionally, the communication apparatus 800 includes one or more memories 820, configured to store instructions 840. The instructions may be run on the processor 810, to enable the communication apparatus 800 to perform the method described in the method embodiments. The memory 820 is coupled to the processor 810. Couplings in embodiments of this application are indirect couplings or communication connections between apparatuses, units, or modules, may be in electrical, mechanical, or other forms, and are used for information exchange between the apparatuses, units, or modules. The processor 810 may cooperate with the memory 820. At least one of the at least one memory may be included in the processor. It should be noted that the memory 820 is not mandatory, and therefore is shown by using dashed lines in FIG. 8.

Optionally, the memory 820 may further store data. The processor and the memory may be separately disposed, or may be integrated together. In this embodiment of this application, the memory 820 may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the processor in embodiments of this application may be a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium of any other form well known in thert. For example, the storage medium is coupled to the processor, so that the processor can read information from the storage medium or write information into the storage medium. Certainly, the storage medium may alternatively be a component of the processor. The processor and the storage medium may be located in an ASIC. In addition, the ASIC may be located in the network device or the terminal device. Certainly, the processor and the storage medium may alternatively exist as discrete components in the network device or the terminal device.

The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store program instructions and/or data.

Optionally, the communication apparatus 800 may include instructions 830 (sometimes may also be referred to as code or a program). The instructions 830 may be run on the processor, to enable the communication apparatus 800 to perform the method described in the embodiments. The processor 810 may store data.

Optionally, the communication apparatus 800 may further include a transceiver 850 and an antenna 860. The transceiver 850 may be referred to as a transceiver unit, a transceiver module, a transceiver machine, a transceiver circuit, a transceiver, an input/output interface, or the like, and is configured to implement receiving and sending functions of the communication apparatus 800 through the antenna 860.

The processor 810 and the transceiver 850 described in this application may be implemented in an integrated circuit (integrated circuit, IC), an analog IC, a radio frequency integrated circuit (radio frequency identification, RFID), a mixed signal IC, an ASIC, a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions of the terminal device and the network device. Details are not described herein again.

Optionally, the communication apparatus 800 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 800 may include more or fewer components, or some components are integrated, or some components are split. These components may be implemented by hardware, software, or a combination of software and hardware.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more processes in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

Clearly, a person skilled in the art can make various modifications and variations to this application without departing from the scope of this application. This application is intended to cover these modifications and variations of this application provided that they fall within the scope of protection defined by the claims of this application and their equivalent technologies.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A channel state parameter reporting method, comprising:

    obtaining a quantity of space domain basis vectors respectively corresponding to N channel state information reference signal CSI-RS resources, wherein the N CSI-RS resources are determined in Q CSI-RS resources, N is a positive integer less than or equal to Q, and Q is a positive integer greater than or equal to 1; and
    sending indication information, wherein the indication information indicates the quantity of space domain basis vectors respectively corresponding to the N CSI-RS resources.

2. The method according to claim 1, wherein the method further comprises:

    obtaining a first parameter, wherein the first parameter indicates a maximum value of a sum of the quantity of space domain basis vectors respectively corresponding to the N CSI-RS resources; and
    determining, based on the first parameter, the quantity of space domain basis vectors respectively corresponding to the N CSI-RS resources.

3. The method according to claim 2, wherein the obtaining a quantity of space domain basis vectors respectively corresponding to N CSI-RS resources comprises:
obtaining, based on the first parameter and a space domain basis vector quantity value candidate set, the quantity of space domain basis vectors respectively corresponding to the N CSI-RS resources, wherein the space domain basis vector quantity value candidate set comprises at least one value, and any one of the quantity of space domain basis vectors respectively corresponding to the N CSI-RS resources belongs to the space domain basis vector quantity value candidate set.

4. The method according to claim 3, wherein that the indication information indicates the quantity of space domain basis vectors respectively corresponding to the N CSI-RS resources comprises:
the indication information comprises first indication information and second indication information, the first indication information indicates the sum of the quantity of space domain basis vectors respectively corresponding to the N CSI-RS resources, and the second indication information indicates the quantity of space domain basis vectors respectively corresponding to the N CSI-RS resources.

5. The method according to claim 4, wherein the second indication information indicates space domain basis vectors corresponding to the N CSI-RS resources.

6. The method according to claim 5, wherein the second indication information comprises S bits, S is determined based on N, P, and $L_{tot}$, P is a quantity of CSI-RS ports corresponding to any one of the N CSI-RS resources, and $L_{tot}$ is the sum of the quantity of space domain basis vectors respectively corresponding to the N CSI-RS resources.

7. The method according to any one of claims 4 to 6, wherein the first indication information is carried in a first part of channel state information, and the second indication information is carried in a second part of the channel state information.

8. The method according to claim 3, wherein the indication information comprises $Q*\lceil log2(Y) \rceil$ bits, first $N*\lceil log2(Y) \rceil$ bits or last $N*\lceil log2(Y) \rceil$ bits of the indication information indicate the quantity of space domain basis vectors respectively corresponding to the N CSI-RS resources, every $\lceil log2(Y) \rceil$ bits in the first $N*\lceil log2(Y) \rceil$ bits or last $N*\lceil log2(Y) \rceil$ bits of the indication information correspond to an index of one space domain basis vector quantity in the space domain basis vector quantity value candidate set, and Y is a quantity of elements comprised in the space domain basis vector quantity value candidate set.

9. The method according to claim 3, wherein the indication information comprises $Q*\lceil log2(Y) \rceil$ bits, the $Q*\lceil log2(Y) \rceil$ bits are divided into Q groups, any one of the Q groups comprises $\lceil log2(Y) \rceil$ bits, the Q groups respectively correspond to the Q CSI-RS resources, N groups of bits corresponding to the N CSI-RS resources respectively indicate indexes of the quantity of space domain basis vectors respectively corresponding to the N CSI-RS resources in the space domain basis vector quantity value candidate set, and Y is a quantity of elements comprised in the space domain basis vector quantity value candidate set.

10. The method according to claim 2, wherein the obtaining a quantity of space domain basis vectors respectively corresponding to N CSI-RS resources comprises:
obtaining, based on the first parameter and a first correspondence, the quantity of space domain basis vectors respectively corresponding to the N CSI-RS resources, wherein the first correspondence is a correspondence between a first index and the quantity of space domain basis vectors respectively corresponding to the N CSI-RS resources.

11. The method according to claim 10, wherein the first correspondence belongs to a second correspondence, the second correspondence comprises at least two correspondences, the at least two correspondences comprise at least two indexes, the at least two indexes comprise the second index and a third index, a value of the second index is less than a value of the third index, and a sum of a quantity of space domain basis vectors that respectively correspond to the N CSI-RS resources and that correspond to the second index is less than a sum of a quantity of space domain basis vectors that respectively correspond to the N CSI-RS resources and that correspond to the third index.

12. The method according to claim 10 or 11, wherein that the indication information indicates the quantity of space domain basis vectors respectively corresponding to the N CSI-RS resources comprises:
the indication information indicates the first index.

13. The method according to any one of claims 2 to 12, comprising:

receiving configuration information, wherein the configuration information indicates at least one of the following:
the first parameter;
an average value of a quantity of space domain basis vectors supported by the N CSI-RS resources; and
an average value of a quantity of space domain basis vectors supported by the Q CSI-RS resources; and
the obtaining a first parameter comprises:
determining the first parameter based on the configuration information.

14. The method according to any one of claims 1 to 13, wherein the indication information further indicates the N CSI-RS resources.

15. A channel state parameter reporting method, comprising:

receiving indication information, wherein the indication information indicates a quantity of space domain basis vectors respectively corresponding to N channel state information reference signal resources CSI-RS resources, the N CSI-RS resources are determined in Q CSI-RS resources, N is a positive integer less than or equal to Q, and Q is a positive integer greater than or equal to 1; and
determining precoding matrices based on the quantity of space domain basis vectors respectively corresponding to the N CSI-RS resources.

16. The method according to claim 1, comprising:
the quantity of space domain basis vectors respectively corresponding to the N CSI-RS resources are determined based on a first parameter, and the first parameter indicates a maximum value of a sum of the quantity of space domain basis vectors respectively corresponding to the N CSI-RS resources.

17. The method according to claim 16, wherein that the quantity of space domain basis vectors respectively corresponding to the N CSI-RS resources are determined based on a first parameter comprises:
the quantity of space domain basis vectors respectively corresponding to the N CSI-RS resources are determined based on the first parameter and a space domain basis vector quantity value candidate set, the first space domain basis vector quantity value candidate set comprises at least one value, and any one of the quantity of space domain basis vectors respectively corresponding to the N CSI-RS resources belongs to the space domain basis vector quantity value candidate set.

18. The method according to claim 17, wherein that the indication information indicates a quantity of space domain basis vectors respectively corresponding to N CSI-RS resources comprises:
the indication information comprises first indication information and second indication information, the first indication information indicates the sum of the quantity of space domain basis vectors respectively corresponding to the N CSI-RS resources, and the second indication information indicates the quantity of space domain basis vectors respectively corresponding to the N CSI-RS resources.

19. The method according to claim 18, wherein the second indication information indicates space domain basis vectors corresponding to the N CSI-RS resources.

20. The method according to claim 19, wherein the second indication information comprises S bits, S is determined based on N, P, and $L_{tot}$, P is a quantity of CSI-RS ports of a TRP corresponding to any one of the N CSI-RS resources, and $L_{tot}$ is the sum of the quantity of space domain basis vectors respectively corresponding to the N CSI-RS resources.

21. The method according to any one of claims 18 to 20, wherein the first indication information is carried in a first part of channel state information, and the second indication information is carried in a second part of the channel state information.

22. The method according to claim 17, wherein the indication information comprises $Q*\lceil log2(Y) \rceil$ bits, first

$N*\lceil log2(Y)\rceil$ bits or last $N*\lceil log2(Y)\rceil$ bits of the indication information indicate the quantity of space domain basis vectors respectively corresponding to the N CSI-RS resources, every $\lceil log2(Y)\rceil$ bits in the first $N*\lceil log2(Y)\rceil$ bits or last $N*\lceil log2(Y)\rceil$ bits of the indication information correspond to an index of one space domain basis vector quantity in the space domain basis vector quantity value candidate set, and Y is a quantity of elements comprised in the space domain basis vector quantity value candidate set.

23. The method according to claim 17, wherein the indication information comprises $Q*\lceil log2(Y)\rceil$ bits, the $Q*\lceil log2(Y)\rceil$ bits are divided into Q groups, any one of the Q groups comprises $\lceil log2(Y)\rceil$ bits, the Q groups respectively correspond to the Q CSI-RS resources, and N groups of bits corresponding to the N CSI-RS resources respectively indicate indexes of the quantity of space domain basis vectors respectively corresponding to the N CSI-RS resources in the space domain basis vector quantity value candidate set.

24. The method according to claim 16, wherein that the quantity of space domain basis vectors respectively corresponding to the N CSI-RS resources are determined based on a first parameter comprises:
the quantity of space domain basis vectors respectively corresponding to the N CSI-RS resources are determined based on the first parameter and a first correspondence, wherein the first correspondence is a correspondence between a first index and the quantity of space domain basis vectors respectively corresponding to the N CSI-RS resources.

25. The method according to claim 24, wherein the first correspondence belongs to a second correspondence, the second correspondence comprises at least two correspondences, the at least two correspondences comprise at least two indexes, the at least two indexes comprise the second index and a third index, a value of the second index is less than a value of the third index, and a sum of a quantity of space domain basis vectors that respectively correspond to the N CSI-RS resources and that correspond to the second index is less than a sum of a quantity of space domain basis vectors that respectively correspond to the N CSI-RS resources and that correspond to the third index.

26. The method according to claim 24 or 25, wherein that the indication information indicates a quantity of space domain basis vectors respectively corresponding to N CSI-RS resources comprises:
the indication information indicates the first index.

27. The method according to any one of claims 16 to 26, wherein the method further comprises:
sending configuration information, wherein the configuration information is used to determine the first parameter, and the configuration information indicates at least one of the following:

the first parameter;
an average value of a quantity of space domain basis vectors supported by the N CSI-RS resources; and
an average value of a quantity of space domain basis vectors supported by the Q CSI-RS resources.

28. The method according to any one of claims 15 to 27, wherein the indication information further indicates the N CSI-RS resources.

29. A communication apparatus, wherein the communication apparatus comprises a processing module and a transceiver module, wherein

the processing module is configured to obtain a quantity of space domain basis vectors respectively corresponding to N channel state information reference signal resources CSI-RS resources, wherein the N CSI-RS resources are determined in Q CSI-RS resources, N is a positive integer less than or equal to Q, and Q is a positive integer greater than or equal to 1; and
the transceiver module is configured to send indication information, wherein the indication information indicates the quantity of space domain basis vectors respectively corresponding to the N CSI-RS resources.

30. The apparatus according to claim 29, wherein the processing module is further configured to obtain a first parameter, wherein the first parameter indicates a maximum value of a sum of the quantity of space domain basis vectors respectively corresponding to the N CSI-RS resources; and the processing module is further configured to determine, based on the first parameter, the quantity of space domain basis vectors respectively corresponding to the N CSI-RS resources.

31. The apparatus according to claim 30, wherein that the processing module is further configured to determine, based on the first parameter, the quantity of space domain basis vectors respectively corresponding to the N CSI-RS resources comprises:
the processing module is configured to obtain, based on the first parameter and a space domain basis vector quantity value candidate set, the quantity of space domain basis vectors respectively corresponding to the N CSI-RS resources, wherein the space domain basis vector quantity value candidate set comprises at least one value, and any one of the quantity of space domain basis vectors respectively corresponding to the N CSI-RS resources belongs to the space domain basis vector quantity value candidate set.

32. The apparatus according to claim 31, wherein that the indication information indicates the quantity of space domain basis vectors respectively corresponding to the N CSI-RS resources comprises:
the indication information comprises first indication information and second indication information, the first indication information indicates the sum of the quantity of space domain basis vectors respectively corresponding to the N CSI-RS resources, and the second indication information indicates the quantity of space domain basis vectors respectively corresponding to the N CSI-RS resources.

33. The apparatus according to claim 32, wherein the second indication information indicates space domain basis vectors corresponding to the N CSI-RS resources.

34. The apparatus according to claim 33, wherein the second indication information comprises S bits, S is determined based on N, P, and $L_{tot}$, P is a quantity of CSI-RS ports of a TRP corresponding to any one of the N CSI-RS resources, and $L_{tot}$ is the sum of the quantity of space domain basis vectors respectively corresponding to the N CSI-RS resources.

35. The apparatus according to any one of claims 32 to 34, wherein the first indication information is carried in a first part of channel state information, and the second indication information is carried in a second part of the channel state information.

36. The apparatus according to claim 31, wherein the indication information comprises $Q*\lceil log2(Y) \rceil$ bits, first $N*\lceil log2(Y) \rceil$ bits or last $N*\lceil log2(Y) \rceil$ bits of the indication information indicate the quantity of space domain basis vectors respectively corresponding to the N CSI-RS resources, every $\lceil log2(Y) \rceil$ bits in the first $N*\lceil log2(Y) \rceil$ bits or last $N*\lceil log2(Y) \rceil$ bits of the indication information correspond to an index of one space domain basis vector quantity in the space domain basis vector quantity value candidate set, and Y is a quantity of elements comprised in the space domain basis vector quantity value candidate set.

37. The apparatus according to claim 31, wherein the indication information comprises $Q*\lceil log2(Y) \rceil$ bits, the $Q*\lceil log2(Y) \rceil$ bits are divided into Q groups, any one of the Q groups comprises $\lceil log2(Y) \rceil$ bits, the Q groups respectively correspond to the Q CSI-RS resources, N groups of bits corresponding to the N CSI-RS resources respectively indicate indexes of the quantity of space domain basis vectors respectively corresponding to the N CSI-RS resources in the space domain basis vector quantity value candidate set, and Y is a quantity of elements comprised in the space domain basis vector quantity value candidate set.

38. The apparatus according to claim 30, wherein that the processing module is configured to obtain a quantity of space domain basis vectors respectively corresponding to N CSI-RS resources comprises:
the processing module is configured to obtain, based on the first parameter and a first correspondence, the quantity of space domain basis vectors respectively corresponding to the N CSI-RS resources, wherein the first correspondence is a correspondence between a first index and the quantity of space domain basis vectors respectively corresponding to the N CSI-RS resources.

39. The apparatus according to claim 38, wherein the first correspondence belongs to a second correspondence, the second correspondence comprises at least two correspondences, the at least two correspondences comprise at least two indexes, the at least two indexes comprise the second index and a third index, a value of the second index is less than a value of the third index, and a sum of a quantity of space domain basis vectors that respectively correspond to the N CSI-RS resources and that correspond to the second index is less than a sum of a quantity of space domain basis vectors that respectively correspond to the N CSI-RS resources and that correspond to the third index.

40. The apparatus according to claim 38 or 39, wherein that the indication information indicates the quantity of space domain basis vectors respectively corresponding to the N CSI-RS resources comprises: the indication information indicates the first index.

41. The apparatus according to any one of claims 30 to 40, wherein the transceiver module is further configured to receive configuration information, wherein the configuration information indicates at least one of the following:

the first parameter;
an average value of a quantity of space domain basis vectors supported by the N CSI-RS resources; and
an average value of a quantity of space domain basis vectors supported by the Q CSI-RS resources; and
the obtaining the first parameter comprises:
the processing module is further configured to determine the first parameter based on the configuration information.

42. The apparatus according to any one of claims 29 to 41, wherein the indication information further indicates the N CSI-RS resources.

43. A communication apparatus, wherein the communication apparatus comprises a processing module and a transceiver module, wherein

the transceiver module is configured to receive indication information, wherein the indication information indicates a quantity of space domain basis vectors respectively corresponding to N channel state information reference signal resources CSI-RS resources, the N CSI-RS resources are determined in Q CSI-RS resources, N is a positive integer less than or equal to Q, and Q is a positive integer greater than or equal to 1; and
the processing module is configured to determine precoding matrices based on the quantity of space domain basis vectors respectively corresponding to the N CSI-RS resources.

44. The apparatus according to claim 43, wherein the quantity of space domain basis vectors respectively corresponding to the N CSI-RS resources are determined based on a first parameter, and the first parameter indicates a maximum value of a sum of the quantity of space domain basis vectors respectively corresponding to the N CSI-RS resources.

45. The apparatus according to claim 44, wherein that the quantity of space domain basis vectors respectively corresponding to the N CSI-RS resources are determined based on a first parameter comprises:
the quantity of space domain basis vectors respectively corresponding to the N CSI-RS resources are determined based on the first parameter and a space domain basis vector quantity value candidate set, the first space domain basis vector quantity value candidate set comprises at least one value, and any one of the quantity of space domain basis vectors respectively corresponding to the N CSI-RS resources belongs to the space domain basis vector quantity value candidate set.

46. The apparatus according to claim 45, wherein that the indication information indicates a quantity of space domain basis vectors respectively corresponding to N CSI-RS resources comprises:
the indication information comprises first indication information and second indication information, the first indication information indicates the sum of the quantity of space domain basis vectors respectively corresponding to the N CSI-RS resources, and the second indication information indicates the quantity of space domain basis vectors respectively corresponding to the N CSI-RS resources.

47. The apparatus according to claim 46, wherein the second indication information indicates space domain basis vectors corresponding to the N CSI-RS resources.

48. The apparatus according to claim 47, wherein the second indication information comprises S bits, S is determined based on N, P, and $L_{tot}$, P is a quantity of CSI-RS ports of a TRP corresponding to any one of the N CSI-RS resources, and $L_{tot}$ is the sum of the quantity of space domain basis vectors respectively corresponding to the N CSI-RS resources.

49. The apparatus according to any one of claims 46 to 48, wherein the first indication information is carried in a first part of channel state information, and the second indication information is carried in a second part of the channel state information.

50. The apparatus according to claim 45, wherein the indication information comprises $Q^{*}\lceil log2(Y)\rceil$ bits, first $N^{*}\lceil log2(Y)\rceil$ bits or last $N^{*}\lceil log2(Y)\rceil$ bits of the indication information indicate the quantity of space domain basis vectors respectively corresponding to the N CSI-RS resources, every $\lceil log2(Y)\rceil$ bits in the first $N^{*}\lceil log2(Y)\rceil$ bits or last $N^{*}\lceil log2(Y)\rceil$ bits of the indication information correspond to an index of one space domain basis vector quantity in the space domain basis vector quantity value candidate set, and Y is a quantity of elements comprised in the space domain basis vector quantity value candidate set.

51. The apparatus according to claim 45, wherein the indication information comprises $Q^{*}\lceil log2(Y)\rceil$ bits, the $Q^{*}\lceil log2(Y)\rceil$ bits are divided into Q groups, any one of the Q groups comprises $\lceil log2(Y)\rceil$ bits, the Q groups respectively correspond to the Q CSI-RS resources, and N groups of bits corresponding to the N CSI-RS resources respectively indicate indexes of the quantity of space domain basis vectors respectively corresponding to the N CSI-RS resources in the space domain basis vector quantity value candidate set.

52. The apparatus according to claim 44, wherein that the quantity of space domain basis vectors respectively corresponding to the N CSI-RS resources are determined based on a first parameter comprises:
the quantity of space domain basis vectors respectively corresponding to the N CSI-RS resources are determined based on the first parameter and a first correspondence, wherein the first correspondence is a correspondence between a first index and the quantity of space domain basis vectors respectively corresponding to the N CSI-RS resources.

53. The apparatus according to claim 52, wherein the first correspondence belongs to a second correspondence, the second correspondence comprises at least two correspondences, the at least two correspondences comprise at least two indexes, the at least two indexes comprise the second index and a third index, a value of the second index is less than a value of the third index, and a sum of a quantity of space domain basis vectors that respectively correspond to the N CSI-RS resources and that correspond to the second index is less than a sum of a quantity of space domain basis vectors that respectively correspond to the N CSI-RS resources and that correspond to the third index.

54. The apparatus according to claim 52 or 53, wherein that the indication information indicates a quantity of space domain basis vectors respectively corresponding to N CSI-RS resources comprises:
the indication information indicates the first index.

55. The apparatus according to any one of claims 16 to 26, wherein the transceiver module is further configured to send configuration information, the configuration information is used to determine the first parameter, and the configuration information indicates at least one of the following:

the first parameter;
an average value of a quantity of space domain basis vectors supported by the N CSI-RS resources; and
an average value of a quantity of space domain basis vectors supported by the Q CSI-RS resources.

56. The apparatus according to any one of claims 43 to 55, wherein the indication information further indicates the N CSI-RS resources.

57. A communication apparatus, wherein the apparatus comprises a processor, the processor is coupled to a memory, and the memory stores instructions; and when the instructions are run by the processor, the processor is enabled to perform the method according to any one of claims 1 to 14, or perform the method according to any one of claims 15 to 28.

58. A communication apparatus, wherein the apparatus comprises a logic circuit, and the logic circuit is configured to: be coupled to an input/output interface, and perform data transmission through the input/output interface, to perform the method according to any one of claims 1 to 14, or perform the method according to any one of claims 15 to 28.

59. A communication system, wherein the system comprises the communication apparatus according to any one of claims 29 to 42 and the communication apparatus according to any one of claims 43 to 56.

60. A computer-readable storage medium, wherein the computer-readable storage medium is configured to store a computer program; and when the computer program runs on a computer, the computer is enabled to perform the method according to any one of claims 1 to 14, or perform the method according to any one of claims 15 to 28.

61. A computer program product, wherein the computer program product comprises computer program code; and when the computer program code is run, the method according to any one of claims 1 to 14 is implemented, or the method according to any one of claims 15 to 28 is performed.

FIG. 1

FIG. 2

```
┌──────────┐                              ┌──────────┐
│ Network  │                              │ Terminal │
│  device  │                              │  device  │
└────┬─────┘                              └────┬─────┘
     │   Channel measurement configuration     │
     │              information                │
     │────────────────────────────────────────▶│
     │                                          │
     │                CSI-RS                    │
     │────────────────────────────────────────▶│
     │                                          │
     │                 CSI                      │
     │◀────────────────────────────────────────│
     │                                          │
     │            PDCCH and PDSCH               │
     │────────────────────────────────────────▶│
     │                                          │
```

FIG. 3

```
┌──────────────┐                          ┌──────────────┐
│Network device│                          │Terminal device│
└──────┬───────┘                          └──────┬───────┘
 ┌─────┴──────────────────────┐                  │
 │Obtain angle information and │                  │
 │delay information of a       │                  │
 │downlink channel             │                  │
 └─────┬──────────────────────┘                  │
       │              RS                          │
       │─────────────────────────────────────────▶│
       │                           ┌──────────────┴────┐
       │                           │Perform measurement│
       │                           │on the downlink    │
       │                           │channel based on   │
       │                           │the RS             │
       │                           └──────────────┬────┘
       │              CSI                         │
       │◀─────────────────────────────────────────│
 ┌─────┴──────────────┐                           │
 │Determine a precoding│                          │
 │matrix based on the  │                          │
 │CSI, the angle       │                          │
 │information, and the │                          │
 │delay information    │                          │
 └─────┬──────────────┘                           │
       │                                          │
```

FIG. 4

| Network device | | Terminal device |
| --- | --- | --- |
| | | Step 501: Obtain space domain basis vector quantities respectively corresponding to N CSI-RS resources |
| | Step 502: Indication information | |
| Step 503: Determine precoding matrices based on the space domain basis vector quantities respectively corresponding to the N CSI-RS resources | | |

FIG. 5

| Network device | | Terminal device |
| --- | --- | --- |
| | Step 601: Indication information #A | |
| | | Step 602: Determine N TRPs |
| | Step 603: Indication information #B | |
| Step 604: Determine precoding matrices based on space domain basis vector quantities respectively corresponding to the N TRPs | | |

FIG. 6

700

| Processing unit 710 | Communication unit 720 |
| --- | --- |

FIG. 7

FIG. 8

## INTERNATIONAL SEARCH REPORT

| International application No. |
| --- |
| **PCT/CN2023/127171** |

| A. | CLASSIFICATION OF SUBJECT MATTER |
| --- | --- |

H04W72/04(2023.01)i;  H04B7/0456(2017.01)i

According to International Patent Classification (IPC) or to both national classification and IPC

| B. | FIELDS SEARCHED |
| --- | --- |

Minimum documentation searched (classification system followed by classification symbols)

IPC:  H04W H04B

Documentation searched other than minimum documentation to the extent that such documents are included in the fields searched

Electronic data base consulted during the international search (name of data base and, where practicable, search terms used)

OETXT; CNTXT; WPABSC; ENTXTC; VEN; DWPI; WPABS; CNKI; 3GPP: 空域, 空间, 基本, 基础, 基, 向量, 矢量, 数量, 数目, 个数, 协作, 多站, CSI, space, spatial, domain, base, basis, basic, vector?, number, cooperati+, TRP, CJT

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| E | WO 2023206174 A1 (BEIJING XIAOMI MOBILE SOFTWARE CO., LTD.) 02 November 2023 (2023-11-02) description, page 5, line 8 to page 7, 5th-to-last line | 1, 15, 29, 43, 57-61 |
| PX | CN 116743217 A (HUAWEI TECHNOLOGIES CO., LTD.) 12 September 2023 (2023-09-12) description, paragraphs [0266], [0307], [0314], [0335], and [0394]-[0419] | 1, 2, 13, 15, 16, 27, 29, 30, 41, 43, 44, 55, 57-61 |
| A | WO 2022094821 A1 (HUAWEI TECHNOLOGIES CO., LTD.) 12 May 2022 (2022-05-12) description, page 6, line 3 to page 7, line 23 | 1-61 |
| A | WO 2021223211 A1 (QUALCOMM INC. et al.) 11 November 2021 (2021-11-11) entire document | 1-61 |
| A | CN 111865377 A (HUAWEI TECHNOLOGIES CO., LTD.) 30 October 2020 (2020-10-30) entire document | 1-61 |
| A | ZTE. "CSI Enhancement for High/Medium UE Velocities and CJT" *3GPP TSG RAN WG1 Meeting #109-e R1-2203265,* 29 April 2022 (2022-04-29), sections 3.1 and 3.2 | 1-61 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 January 2024** | **18 January 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

PCT/CN2023/127171

| Patent document cited in search report | | | Publication date (day/month/year) | Patent family member(s) | | | Publication date (day/month/year) |
|---|---|---|---|---|---|---|---|
| WO | 2023206174 | A1 | 02 November 2023 | None | | | |
| CN | 116743217 | A | 12 September 2023 | None | | | |
| WO | 2022094821 | A1 | 12 May 2022 | KR | 20230096072 | A | 29 June 2023 |
| | | | | EP | 4236095 | A1 | 30 August 2023 |
| | | | | CN | 116508369 | A | 28 July 2023 |
| | | | | BR | 112023008073 | A2 | 06 June 2023 |
| WO | 2021223211 | A1 | 11 November 2021 | US | 2023156724 | A1 | 18 May 2023 |
| | | | | EP | 4147508 | A1 | 15 March 2023 |
| | | | | CN | 115516956 | A | 23 December 2022 |
| | | | | IN | 202227064079 | A | 31 March 2023 |
| CN | 111865377 | A | 30 October 2020 | WO | 2020221118 | A1 | 05 November 2020 |
| | | | | KR | 20210153118 | A | 16 December 2021 |
| | | | | IN | 202127047435 | A | 11 February 2022 |
| | | | | US | 2022052740 | A1 | 17 February 2022 |
| | | | | EP | 3975442 | A1 | 30 March 2022 |
| | | | | CN | 111865377 | B | 14 June 2022 |
| | | | | EP | 3975442 | A4 | 22 June 2022 |
| | | | | JP | 2022530973 | A | 05 July 2022 |
| | | | | CN | 115426018 | A | 02 December 2022 |
| | | | | JP | 7238167 | B2 | 13 March 2023 |

Form PCT/ISA/210 (patent family annex) (July 2022)

**EP 4 615 089 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211378581